# EUROPEAN PATENT APPLICATION

(11) **EP 4 761 426 A1**
(43) Date of publication of application: **17.06.2026**
(21) Application number: 23948130.2
(22) Date of filing: 10.08.2023
(51) Int. Cl.: H04W 72/23

(54) **METHOD FOR DETERMINING UPLINK TRANSMISSION RESOURCE, AND COMMUNICATION APPARATUS, COMMUNICATION DEVICE AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/112401
(87) International publication number: WO 2025/030560

(57) **Abstract**

Provided in the embodiments of the present disclosure are a method for determining an uplink transmission resource, and a communication apparatus, a communication device and a storage medium. The method comprises: a terminal obtaining first information, which is used for indicating a symbol type that can be used in uplink transmission, for example, at least one of an SBFD symbol and a non-SBFD symbol; and the terminal determining, on the basis of the first information, whether a first slot in which a first uplink signal is located is an unavailable slot. In this way, the process of a terminal determining an unavailable slot in an SBFD scenario is implemented.

## Description

### FIELD

The present disclosure relates to the field of communication technologies, and in particular, to a method for determining an uplink transmission resource, and a communication apparatus, device and storage medium.

### BACKGROUND

To improve uplink coverage and throughput, research is conducted on subband full duplex (SBFD). Based on an SBFD scheme, a component carrier (CC) (which may be simply referred to as a carrier) may include a plurality of subbands (SBs), and the plurality of SBs may be contiguous non-overlapping frequency domain resources in the frequency domain. These SBs may include one uplink (UL) subband and at least one downlink (DL) subband. Thus, within the same CC, a UL subband and a DL subband may coexist simultaneously, i.e., simultaneous transmission and reception may be achieved on one CC.

### SUMMARY

In an SBFD scenario, how to determine whether a slot in which a first uplink signal is located is a non-available slot needs to be clarified.

According to a first aspect of embodiments of the present disclosure, a method for determining an uplink transmission resource is provided. The method may be performed by a terminal. The method may include: obtaining first information, where the first information indicates a symbol type usable for uplink transmission, and the symbol type includes at least one of a subband full duplex (SBFD) symbol or a non-SBFD symbol; and determining whether a first slot in which a first uplink signal is located is a non-available slot according to the first information.

According to a second aspect of embodiments of the present disclosure, a method for determining an uplink transmission resource is provided. The method may be performed by a network device. The method includes: transmitting first information, where the first information indicates a symbol type usable for uplink transmission, and the symbol type includes at least one of an SBFD symbol or a non-SBFD symbol.

According to a third aspect of embodiments of the present disclosure, a communication apparatus is provided. The apparatus may be arranged in a terminal. The communication apparatus may include: a processing module, configured to obtain first information, where the first information indicates a symbol type usable for uplink transmission, and the symbol type includes at least one of an SBFD symbol or a non-SBFD symbol; and determine whether a first slot in which a first uplink signal is located is an non-available slot according to the first information.

According to a fourth aspect of embodiments of the present disclosure, a communication apparatus is provided. The apparatus may be arranged in a network device. The communication apparatus may include: a transmission module, configured to transmit first information, where the first information indicates a symbol type usable for uplink transmission, and the symbol type includes at least one of an SBFD symbol or a non-SBFD symbol.

According to a fifth aspect of embodiments of the present disclosure, a communication device is provided, such as a terminal or a network device. The communication device includes at least one processor. The processor is configured to invoke instructions to perform the method according to any one of the first aspect, the second aspect, and their embodiments.

According to a sixth aspect of embodiments of the present disclosure, a storage medium is provided. The storage medium stores instructions. The instructions are executed by a processor to perform the method according to any one of the first aspect, the second aspect, and their embodiments.

According to a seventh aspect of embodiments of the present disclosure, a computer program or computer program product is provided. The computer program or computer program product includes codes. The codes are executed by a processor to perform the method according to any one of the first aspect, the second aspect, and their embodiments.

Through embodiments of the present disclosure, the process of a terminal determining non-available slot in an SBFD scenario is achieved.

It should be understood that the above general description and the following detailed description are illustrative and explanatory only and are not restrictive of embodiments of the present disclosure.

### BRIEF DESCRIPTION OF THE DRAWINGS

The accompanying drawings here are incorporated into the specification and constitute a part of the specification. These accompanying drawings illustrate embodiments conform to the present disclosure and are used to explain the principles of embodiments of the present disclosure together with the specification.
FIG. 1 is a schematic diagram of an architecture of a communication system according to an embodiment of the present disclosure.
FIG. 2 is a schematic diagram of an SBFD symbol or an SBFD slot according to an embodiment of the present disclosure.
FIG. 3 is a schematic diagram of uplink transmission according to an embodiment of the present disclosure.
FIG. 4 is an illustrative interaction diagram of a method for determining an uplink transmission resource according to an embodiment of the present disclosure.
FIG. 5 is an illustrative flowchart of a method for determining an uplink transmission resource performed on a terminal side according to an embodiment of the present disclosure.
FIG. 6 is an illustrative flowchart of a method for determining an uplink transmission resource performed on a network device side according to an embodiment of the present disclosure.
FIG. 7 is another illustrative flowchart of a method for determining an uplink transmission resource performed on a terminal side according to an embodiment of the present disclosure.
FIG. 8 is another illustrative flowchart of a method for determining an uplink transmission resource performed on a network device side according to an embodiment of the present disclosure.
FIG. 9 is another illustrative interaction diagram of a method for determining an uplink transmission resource according to an embodiment of the present disclosure.
FIG. 10 is an illustrative block diagram of a communication apparatus according to an embodiment of the present disclosure.
FIG. 11 is a schematic block diagram of a communication device according to an embodiment of the present disclosure.

### DETAILED DESCRIPTION

Embodiments of the present disclosure provide a method for determining an uplink transmission resource, and a communication apparatus, device and storage medium.

In a first aspect, embodiments of the present disclosure provide a method for determining an uplink transmission resource. The method may be performed by a terminal. The method may include: obtaining first information, where the first information is configuration information of an uplink transmission resource for a terminal; and determining whether a first slot in which a first uplink signal is located is a non-available slot according to the first information.

In embodiments of the present disclosure, the terminal determines a symbol type usable for uplink transmission, such as an SBFD symbol and a non-SBFD symbol, according to the first information; and determines whether a slot in which a first uplink signal is located is a non-available slot, achieving the process of the terminal determining the non-available slot in the SBFD scenario.

In conjunction with some embodiments of the first aspect, in some embodiments, the non-SBFD symbol includes at least one of an uplink symbol, a downlink symbol, or a flexible symbol.

In conjunction with some embodiments of the first aspect, in some embodiments, the first information further indicates at least one of: multiple uplink transmissions being allowed to use the SBFD symbol and the non-SBFD symbol, and a single uplink transmission being allowed to use only the SBFD symbol or the non-SBFD symbol; multiple uplink transmissions being allowed to use the SBFD symbol and the non-SBFD symbol, and a single uplink transmission being allowed to use the SBFD symbol and the non-SBFD symbol; multiple uplink transmissions being allowed to use only the SBFD symbol, and a single uplink transmission being allowed to use only the SBFD symbol; or multiple uplink transmissions being allowed to use only the non-SBFD symbol, and a single uplink transmission being allowed to use only the non-SBFD symbol.

In conjunction with some embodiments of the first aspect, in some embodiments, in a case where the first information indicates that the multiple uplink transmissions are allowed to use the SBFD symbol and the non-SBFD symbol, and the single uplink transmission is allowed to use only the SBFD symbol or the non-SBFD symbol, the first slot is a non-available slot if at least one of the following conditions is satisfied: a symbol in which the first uplink signal is located includes the SBFD symbol and the non-SBFD symbol; at least one of symbols in which the first uplink signal is located overlaps a symbol in which a first synchronization signal block (SSB) is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first physical downlink control channel (PDCCH) is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the first aspect, in some embodiments, in a case where the first information indicates that the multiple uplink transmissions are allowed to use the SBFD symbol and the non-SBFD symbol, and the single uplink transmission is allowed to use the SBFD symbol and the non-SBFD symbol, the first slot is a non-available slot if at least one of the following conditions is satisfied: at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the first aspect, in some embodiments, in a case where the first information indicates that the multiple uplink transmissions are allowed to use only the SBFD symbol, and the single uplink transmission is allowed to use only the SBFD symbol, the first slot is a non-available slot if at least one of the following conditions is satisfied:

at least one of symbols in which a physical uplink shared channel (PUSCH) in the first slot is located is the non-SBFD symbol; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the first aspect, in some embodiments, the method further includes: determining that a symbol in which the first uplink signal is located includes at least one SBFD symbol according to the first information; and excluding the first slot from slots used for the uplink transmission in a case where a frequency domain range of the first uplink signal on at least one SBFD symbol overlaps a range outside an uplink frequency domain range on the at least one SBFD symbol.

In conjunction with some embodiments of the first aspect, in some embodiments, the uplink frequency domain range on the at least one SBFD symbol is one of: there is an overlapping frequency domain range between a frequency domain range in which an uplink subband on the at least one SBFD symbol is located and an uplink bandwidth part (BWP) of the terminal; or there is an overlapping frequency domain range between a frequency domain range in which an uplink subband and a guard band on the at least one SBFD symbol are located and an uplink BWP of the terminal.

In conjunction with some embodiments of the first aspect, in some embodiments, in a case where the first information indicates that the multiple uplink transmissions are allowed to use only the non-SBFD symbol, and the single uplink transmission is allowed to use only the non-SBFD symbol, the first slot is a non-available slot if at least one of the following conditions is satisfied: at least one of symbols in which a PUSCH in the first slot is located overlaps a downlink symbol configured for the terminal; or at least one of symbols in which a PUSCH in the first slot is located is the non-SBFD symbol.

In conjunction with some embodiments of the first aspect, in some embodiments, the first slot is a non-available slot if at least one of the following conditions is satisfied: a symbol in which the first uplink signal is located overlaps a downlink symbol configured for the terminal; a symbol in which the first uplink signal is located overlaps a symbol in which a first SSB is located, and the first SSB is configured by a network device for the terminal; or at least one of symbols in which the first uplink signal is located overlaps a symbol in which a search space of a first PDCCH is located, and the search space of the first PDCCH is configured by the network device for the terminal.

In conjunction with some embodiments of the first aspect, in some embodiments, the method further includes: excluding the first slot from slots used for the uplink transmission in a case where an interval between a symbol in which the first uplink signal is located and a second PDCCH is less than a minimum time interval corresponding to a terminal capability of the terminal, where the second PDCCH is used to schedule the first uplink signal.

In a second aspect, embodiments of the present disclosure provide a method for determining an uplink transmission resource. The method may be performed by a network device. The method includes: transmitting first information, where the first information is configuration information of an uplink transmission resource for a terminal, and the first information is configured for the terminal to determine whether a first slot in which a first uplink signal is located is a non-available slot.

In conjunction with some embodiments of the second aspect, in some embodiments, the first information indicates a symbol type usable for uplink transmission, and the symbol type includes at least one of a subband full duplex (SBFD) symbol or a non-SBFD symbol.

In conjunction with some embodiments of the second aspect, in some embodiments, the first information further indicates at least one of: multiple uplink transmissions being allowed to use the SBFD symbol and the non-SBFD symbol, and a single uplink transmission being allowed to use only the SBFD symbol or the non-SBFD symbol; multiple uplink transmissions being allowed to use the SBFD symbol and the non-SBFD symbol, and a single uplink transmission being allowed to use the SBFD symbol and the non-SBFD symbol; multiple uplink transmissions being allowed to use only the SBFD symbol, and a single uplink transmission being allowed to use only the SBFD symbol; or multiple uplink transmissions being allowed to use only the non-SBFD symbol, and a single uplink transmission being allowed to use only the non-SBFD symbol.

In conjunction with some embodiments of the second aspect, in some embodiments, in a case where the first information indicates that the multiple uplink transmissions are allowed to use the SBFD symbol and the non-SBFD symbol, and the single uplink transmission is allowed to use only the SBFD symbol or the non-SBFD symbol, the first slot is a non-available slot if at least one of the following conditions is satisfied: a symbol in which the first uplink signal is located includes the SBFD symbol and the non-SBFD symbol; at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the second aspect, in some embodiments, in a case where the first information indicates that the multiple uplink transmissions are allowed to use the SBFD symbol and the non-SBFD symbol, and the single uplink transmission is allowed to use the SBFD symbol and the non-SBFD symbol, the first slot is a non-available slot if at least one of the following conditions is satisfied: at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the second aspect, in some embodiments, in a case where the first information indicates that the multiple uplink transmissions are allowed to use only the SBFD symbol, and the single uplink transmission is allowed to use only the SBFD symbol, the first slot is a non-available slot if at least one of the following conditions is satisfied: at least one of symbols in which a PUSCH in the first slot is located is the non-SBFD symbol; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the second aspect, in some embodiments, in a case where the first information indicates that the multiple uplink transmissions are allowed to use only the non-SBFD symbol, and the single uplink transmission is allowed to use only the non-SBFD symbol, the first slot is a non-available slot if at least one of the following conditions is satisfied: at least one of symbols in which a PUSCH in the first slot is located overlaps a downlink symbol configured for the terminal; or at least one of symbols in which a PUSCH in the first slot is located is the SBFD symbol.

In conjunction with some embodiments of the second aspect, in some embodiments, the first slot is a non-available slot if at least one of the following conditions is satisfied: a symbol in which the first uplink signal is located overlaps a downlink symbol configured for the terminal; a symbol in which the first uplink signal is located overlaps a symbol in which a first SSB is located, and the first SSB is configured by a network device for the terminal; or at least one of symbols in which the first uplink signal is located overlaps a symbol in which a search space of a first PDCCH is located, and the search space of the first PDCCH is configured by the network device for the terminal.

In conjunction with some embodiments of the second aspect, in some embodiments, the method further includes: not transmitting second information from a beginning of a first symbol of symbols in which first downlink control information (DCI) is located until an end of a last symbol of symbols in which a sounding reference signal (SRS) in a first aperiodic SRS resource set is located, where the first DCI is used to trigger the terminal to transmit an aperiodic SRS, the first aperiodic SRS resource set is a resource set in which the aperiodic SRS transmitted by the terminal in response to the first DCI is located, and the second information is used to trigger the terminal to adjust an available slot.

In a third aspect, embodiments of the present disclosure provide an apparatus for determining an uplink transmission resource. The apparatus may be arranged in a terminal. The apparatus may include: a processing module, configured to obtain first information, where the first information is configuration information of the uplink transmission resource for a terminal; and determine whether a first slot in which a first uplink signal is located is a non-available slot according to the first information.

In conjunction with some embodiments of the third aspect, in some embodiments, the first information indicates a symbol type usable for uplink transmission, and the symbol type includes at least one of an SBFD symbol or a non-SBFD symbol.

In conjunction with some embodiments of the third aspect, in some embodiments, the first information further indicates at least one of: multiple uplink transmissions being allowed to use the SBFD symbol and the non-SBFD symbol, and a single uplink transmission being allowed to use only the SBFD symbol or the non-SBFD symbol; multiple uplink transmissions being allowed to use the SBFD symbol and the non-SBFD symbol, and a single uplink transmission being allowed to use the SBFD symbol and the non-SBFD symbol; multiple uplink transmissions being allowed to use only the SBFD symbol, and a single uplink transmission being allowed to use only the SBFD symbol; or multiple uplink transmissions being allowed to use only the non-SBFD symbol, and a single uplink transmission being allowed to use only the non-SBFD symbol.

In conjunction with some embodiments of the third aspect, in some embodiments, in a case where the first information indicates that the multiple uplink transmissions are allowed to use the SBFD symbol and the non-SBFD symbol, and the single uplink transmission is allowed to use only the SBFD symbol or the non-SBFD symbol, the first slot is a non-available slot if at least one of the following conditions is satisfied: a symbol in which the first uplink signal is located includes the SBFD symbol and the non-SBFD symbol; at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the third aspect, in some embodiments, in a case where the first information indicates that the multiple uplink transmissions are allowed to use the SBFD symbol and the non-SBFD symbol, and the single uplink transmission is allowed to use the SBFD symbol and the non-SBFD symbol, the first slot is a non-available slot if at least one of the following conditions is satisfied: at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the third aspect, in some embodiments, in a case where the first information indicates that the multiple uplink transmissions are allowed to use only the SBFD symbol, and the single uplink transmission is allowed to use only the SBFD symbol, the first slot is a non-available slot if at least one of the following conditions is satisfied:

at least one of symbols in which a PUSCH in the first slot is located is the non-SBFD symbol; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the third aspect, in some embodiments, the processing module is further configured to: determine that a symbol in which the first uplink signal is located includes at least one SBFD symbol according to the first information; and exclude the first slot from slots used for the uplink transmission in a case where a frequency domain range of the first uplink signal on at least one SBFD symbol overlaps a range outside an uplink frequency domain range on the at least one SBFD symbol.

In conjunction with some embodiments of the third aspect, in some embodiments, the uplink frequency domain range on the at least one SBFD symbol is one of: there is an overlapping frequency domain range between a frequency domain range in which an uplink subband on the at least one SBFD symbol is located and an uplink BWP of the terminal; or there is an overlapping frequency domain range between a frequency domain range in which an uplink subband and a guard band on the at least one SBFD symbol are located and an uplink BWP of the terminal.

In conjunction with some embodiments of the third aspect, in some embodiments, in a case where the first information indicates that the multiple uplink transmissions are allowed to use only the non-SBFD symbol, and the single uplink transmission is allowed to use only the non-SBFD symbol, the first slot is a non-available slot if at least one of the following conditions is satisfied: at least one of symbols in which the first uplink signal is located overlaps a downlink symbol configured for the terminal; or at least one of symbols in which the first uplink signal is located is the SBFD symbol.

In conjunction with some embodiments of the third aspect, in some embodiments, the first slot is a non-available slot if at least one of the following conditions is satisfied: a symbol in which the first uplink signal is located overlaps a downlink symbol configured for the terminal; a symbol in which the first uplink signal is located overlaps a symbol in which a first SSB is located, and the first SSB is configured by a network device for the terminal; or at least one of symbols in which the first uplink signal is located overlaps a symbol in which a search space of a first PDCCH is located, and the search space of the first PDCCH is configured by the network device for the terminal

In conjunction with some embodiments of the third aspect, in some embodiments, the processing module is further configured to: exclude the first slot from slots used for the uplink transmission in a case where an interval between a symbol in which the first uplink signal is located and a symbol in which a second PDCCH is located is less than a minimum time interval corresponding to a terminal capability of the terminal, where the second PDCCH is used to schedule the first uplink signal.

In a fourth aspect, embodiments of the present disclosure provide an apparatus for determining an uplink transmission resource. The apparatus may be arranged in a network device. The apparatus may include: a transmission module, configured to transmit first information, where the first information is configuration information of the uplink transmission resource for a terminal, and the configuration information of the uplink transmission resource for the terminal is used for the terminal to determine whether a first slot in which a first uplink signal is located is a non-available slot.

In conjunction with some embodiments of the fourth aspect, in some embodiments, the first information indicates a symbol type usable for uplink transmission, and the symbol type includes at least one of an SBFD symbol or a non-SBFD symbol.

In conjunction with some embodiments of the fourth aspect, in some embodiments, the first information further indicates at least one of: multiple uplink transmissions being allowed to use the SBFD symbol and the non-SBFD symbol, and a single uplink transmission being allowed to use only the SBFD symbol or the non-SBFD symbol; multiple uplink transmissions being allowed to use the SBFD symbol and the non-SBFD symbol, and a single uplink transmission being allowed to use the SBFD symbol and the non-SBFD symbol; multiple uplink transmissions being allowed to use only the SBFD symbol, and a single uplink transmission being allowed to use only the SBFD symbol; or multiple uplink transmissions being allowed to use only the non-SBFD symbol, and a single uplink transmission being allowed to use only the non-SBFD symbol.

In conjunction with some embodiments of the fourth aspect, in some embodiments, in a case where the first information indicates that the multiple uplink transmissions are allowed to use the SBFD symbol and the non-SBFD symbol, and the single uplink transmission is allowed to use only the SBFD symbol or the non-SBFD symbol, the first slot is a non-available slot if at least one of the following conditions is satisfied: a symbol in which the first uplink signal is located includes the SBFD symbol and the non-SBFD symbol; at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the fourth aspect, in some embodiments, in a case where the first information indicates that the multiple uplink transmissions are allowed to use the SBFD symbol and the non-SBFD symbol, and the single uplink transmission is allowed to use the SBFD symbol and the non-SBFD symbol, the first slot is a non-available slot if at least one of the following conditions is satisfied: at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the fourth aspect, in some embodiments, in a case where the first information indicates that the multiple uplink transmissions are allowed to use only the SBFD symbol, and the single uplink transmission is allowed to use only the SBFD symbol, the first slot is a non-available slot if at least one of the following conditions is satisfied: at least one of symbols in which a PUSCH in the first slot is located is the non-SBFD symbol; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In conjunction with some embodiments of the fourth aspect, in some embodiments, in a case where the first information indicates that the multiple uplink transmissions are allowed to use only the non-SBFD symbol, and the single uplink transmission is allowed to use only the non-SBFD symbol, the first slot is a non-available slot if at least one of the following conditions is satisfied: at least one of symbols in which a PUSCH in the first slot is located overlaps a downlink symbol configured for the terminal; or at least one of symbols in which a PUSCH in the first slot is located is the SBFD symbol.

In conjunction with some embodiments of the fourth aspect, in some embodiments, the first slot is a non-available slot if at least one of the following conditions is satisfied: a symbol in which the first uplink signal is located overlaps a downlink symbol configured for the terminal; a symbol in which the first uplink signal is located overlaps a symbol in which a first SSB is located, and the first SSB is configured by a network device for the terminal; or at least one of symbols in which the first uplink signal is located overlaps a symbol in which a search space of a first PDCCH is located, and the search space of the first PDCCH is configured by the network device for the terminal

In conjunction with some embodiments of the fourth aspect, in some embodiments, the transmission module is further configured to: not transmit second information from a beginning of a first symbol of symbols in which first DCI is located until an end of a last symbol of symbols in which an SRS in a first aperiodic SRS resource set is located, where the first DCI is used to trigger the terminal to transmit an aperiodic SRS, the first aperiodic SRS resource set is a resource set in which the aperiodic SRS transmitted by the terminal in response to the first DCI is located, and the second information is used to trigger the terminal to adjust an available slot.

In a fifth aspect, embodiments of the present disclosure provide a communication device, such as a terminal or a network device: The communication device includes at least one processor. The processor is configured to call instructions to perform the method according to any one of the first aspect, the second aspect and their embodiments.

In a sixth aspect, embodiments of the present disclosure provide a storage medium. The storage medium stores instructions. The instructions are executed by a processor to perform the method according to any one of the first aspect, the second aspect, and their embodiments.

In a seventh aspect, a computer program or computer program product is provided. The computer program or computer program product includes codes. The codes are executed by a processor to perform the method according to any one of the first aspect, the second aspect, and their embodiments.

It may be understood that the above-mentioned communication apparatus, communication device, storage medium, computer program, and computer program product are all used to perform the method provided by embodiments of the present disclosure. Therefore, the beneficial effects that may be achieved may refer to the beneficial effects in the corresponding methods, which are not repeated here.

Embodiments of the present disclosure propose a method for determining an uplink transmission resource, and a communication apparatus, device and storage medium. In some embodiments, the term "method for determining an uplink transmission resource" may be interchangeable with terms, such as communication method, uplink transmission resource determination method, resource determination method, information processing method, etc. The term "communication apparatus" may be interchangeable with terms, such as apparatus for determining an uplink transmission resource, uplink transmission resource determination apparatus, resource determination apparatus, information processing apparatus, etc.

Embodiments of the present disclosure are not exhaustive, but are merely illustrative of some embodiments, and do not specifically limit the protection scope of the present disclosure. In the case of no contradiction, each step in a certain embodiment may be implemented as an independent embodiment, and the steps may be arbitrarily combined. For example, a solution obtained by removing some steps in a certain embodiment may also be implemented as an independent embodiment. Moreover, the order of the steps in a certain embodiment may be arbitrarily exchanged. In addition, optional implementation manners in a certain embodiment may be arbitrarily combined; furthermore, the embodiments may be arbitrarily combined with each other. For example, some or all steps of different embodiments may be arbitrarily combined, and a certain embodiment may be arbitrarily combined with optional implementation manners of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are only for purpose of description of particular embodiments, and are not intended to limit embodiments of the present disclosure.

In embodiments of the present disclosure, unless otherwise specified, an element represented in the singular form, such as "a", "an", "the", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, the term "plurality of" refers to two or more than two.

In some embodiments, terms such as "at least one of," "one or more," "a plurality of," and "multiple" may be interchangeable with each other.

In some embodiments, descriptions such as "at least one of A and B", "A and/or B", "A in one case, B in another case", "in response to one case A, in response to another case B", etc. may include the following technical solutions according to circumstances: in some embodiments, A (performing A independently of B); in some embodiments, B (performing B independently of A); in some embodiments, select from A and B for performing (A and B are selectively performed); in some embodiments, A and B (both A and B are performed). It is similar to the above when there are more branches such as A, B, C, etc.

In some embodiments, descriptions such as "A or B" may include the following technical solutions according to circumstances: in some embodiments, A (performing A independently of B); in some embodiments, B (performing B independently of A); in some embodiments, select from A and B for performing (A and B are selectively performed). It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types may be the same or different. For another example, when the description object is "information", the "first information" and the "second information" may be the same information or different information, and the contents may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in the event of," "in a case where," "when," "if," "in a case of," and the like may be interchangeable with each other.

In some embodiments, terms such as "greater than", "greater than or equal to", "not smaller than", "more than", "more than or equal to", "not less than", "higher than", "higher than or equal to", "not lower than", "above" and the like may be interchangeable with each other, and terms such as "smaller than", "smaller than or equal to", "not greater than", "less than", "less than or equal to", "not more than", "lower than", "lower than or equal to", "not higher than", "below" and the like may be interchangeable with each other.

In some embodiments, a device or the like may be interpreted as either physical or virtual, and the name thereof is not limited to the name described in the embodiments, and terms such as "apparatus", "equipment", "device", "circuit", "network element", "node", "function", "unit", "section", "system", "network", "chip", "chip system", "entity", and "body" may be interchangeable with each other.

In some embodiments, a "network" may be interpreted as an apparatus (e.g., an access network device, a core network device, a data network device, etc.) included in the network.

In some embodiments, Terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be interchangeable with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. may be interchangeable with each other.

In some embodiments, an access network device, a core network device, or a network device may be interchangeable with a terminal. For example, each embodiment of the present disclosure may be applied to a configuration in which communication between an access network device, a core network device, or a network device and a terminal is interchangeable with communication between a plurality of terminals (for example, a device-to-device (D2D), a vehicle-to-everything (V2X), or the like). In this case, the terminal may have all or a part of the functions of the access network device. Further, terms such as "uplink" and "downlink" may be interchangeable with terms corresponding to inter-terminal communication (for example, "side"). For example, an uplink channel, a downlink channel, or the like may be interchangeable with a sidelink channel, and an uplink, a downlink, or the like may be interchangeable with a sidelink.

In some embodiments, the terminal may be interchangeable with an access network device, a core network device, or a network device. In this case, the access network device, the core network device, or the network device may have all or a part of the functions of the terminal.

In some embodiments, an access network device may also be referred to as an access network function, an access network element, etc.

In some embodiments, a core network device may also be referred to as a core network function, a core network, a core network element, etc. Furthermore, in some embodiments, each network device in the core network may also be referred to as a network function, a network element, etc.

In some embodiments, obtaining data, information, etc., may comply with the laws and regulations of the country where the action takes place.

In some embodiments, data, information, etc., may be obtained after obtaining user consent.

In addition, each element, each row, or each column in the table of embodiments of the present disclosure may be implemented as an independent embodiment, and any combination of any element, any row, or any column may also be implemented as an independent embodiment.

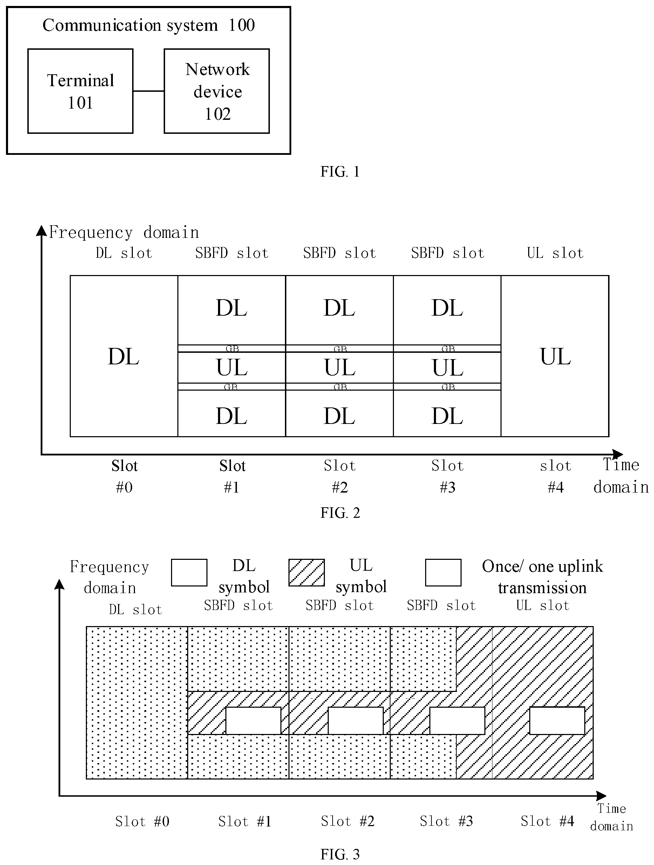

FIG. 1 is a schematic diagram of an architecture of a communication system according to an embodiment of the present disclosure. As illustrated in FIG. 1, a communication system 100 includes a terminal 101, an access network device 102, and a core network 103. One or more core network devices are deployed in the core network 103.

In some embodiments, the terminal 101 includes, for example, at least one of a mobile phone, a wearable device, an Internet of Things (IoT) device, an automobile with a communication function, a smart car, a tablet computer, a computer with a wireless transmission and reception function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, and a wireless terminal device in a smart home, which is not limited to this.

In some embodiments, the access network device 102 may be, for example, a node or device that accesses a terminal to a wireless network, and the access network device may include an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center in a 5G communication system, a base station, an open base station (RAN), a cloud base station (Cloud RAN), a satellite base station in a 6G communication system, a base station in other communication systems, and an access node in a Wi-Fi system, which is not limited to this.

In some embodiments, the technical solution of the present disclosure may be applied to an Open RAN architecture, and at this time, interfaces within network devices according to embodiments of the present disclosure may be changed to internal interfaces of the Open RAN, and flow and information interaction between these internal interfaces may be realized by software or a program.

In some embodiments, the access network device 102 may be composed of a central unit (CU) and a distributed unit (DU), in which the CU may also be referred to as a control unit, and the protocol layer of the network device may be separated by adopting the structure of the CU-DU, some functions of the protocol layer are centrally controlled by the CU, and some or all functions of the remaining protocol layer are distributed in the DU, and the DU is centrally controlled by the CU, which is not limited to this.

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is equally applicable to similar technical problems.

The following embodiments of the present disclosure may be applied to the communication system 100 illustrated in FIG. 1 or a part of the main body, which is not limited to this. Each body illustrated in FIG. 1 is an example, the communication system may include all or some of the bodies in FIG. 1, or other bodies other than FIG. 1, the number and form of the bodies are arbitrary, the connection relationship between the bodies is an example, the bodies may not be connected or connected, and the connection may be any form, including direct connection or indirect connection, wired connection or wireless connection.

Each embodiment of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new Radio (NR), future radio access (FRA), new radio (NR), new radio access (NX), future generation radio access (FX), global system for mobile communications (GSM (registered trademark) ), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X) system, systems using other communication methods, next generation systems extended based on them, and the like. In addition, a plurality of systems may be applied in combination (for example, a combination of LTE or LTE-A and 5G, or the like).

Taking a network device as an access network device and a terminal as a UE as an example, method embodiments provided by embodiments of the present disclosure are introduced below. It should not be understood that embodiments of the present disclosure may only be implemented by the access network device and the UE.

To improve uplink coverage and throughput, research is conducted on subband full duplex (SBFD) in the duplex enhancement project of 3GPP Release 18 (R18). Based on the SBFD scheme, a component carrier (CC) (which may be simply referred to as a carrier) may include a plurality of subbands (SBs), and the plurality of SBs may be contiguous non-overlapping frequency domain resources in the frequency domain. These SBs may include one uplink (UL) subband and at least one DL subband. Thus, within the same CC, a UL subband and a DL subband may coexist simultaneously, i.e., simultaneous transmission and reception may be achieved on one CC.

In some embodiments, on the above-mentioned plurality of subbands, the symbol categories of symbols in one or more slots may be different. For example, the same symbol may be configured as an uplink symbol (which may be denoted as a UL symbol) on part of the subbands, and configured as a downlink symbol (which may be denoted as a DL symbol) on another part of the subbands. Of course, symbols in one or more time units may be configured as flexible symbols (which may be denoted as F symbols) on part of the subbands.

It should be noted that, in embodiments of the present disclosure, a "slot" may be understood as a slot containing 14 orthogonal frequency division multiplexing (OFDM) symbols, or may be understood as a sub-slot containing 7 OFDM symbols, or may also be understood as a mini-slot containing 2 or 4 OFDM symbols. Of course, the "slot" described in embodiments of the present disclosure may also include other numbers of OFDM symbols, which is not specifically limited in embodiments of the present disclosure.

In some embodiments, the SBFD scheme may also be extended to other time units, such as subframes, radio frames, multiple aggregated slots, multiple aggregated subframes, etc., or even transmission time intervals (TTIs), which are not specifically limited in embodiments of the present disclosure.

Then, in the SBFD scenario, how a terminal determines whether a slot may be used for uplink transmission is an urgent problem to be solved.

First, some concepts involved in embodiments of the present disclosure are explained.

### 1. SBFD Slot

In the frequency domain, a symbol may simultaneously contain a DL subband and a UL subband. In this case, the symbol may be called an SBFD symbol. A symbol does not simultaneously contain a DL subband and a UL subband. In this case, the symbol may be called a non-SBFD symbol. A non-SBFD symbol may be a DL symbol, a UL symbol, or an F symbol. A plurality of symbols contained in a slot includes at least one SBFD symbol. In this case, the slot may be called an SBFD slot. All of the plurality of symbols contained in a slot are non-SBFD symbols. In this case, the slot may be called a non-SBFD slot. A non-SBFD slot may be a DL slot, a UL slot, or an F slot. By way of example, FIG. 2 is a schematic diagram of an SBFD symbol or an SBFD slot according to an embodiment of the present disclosure. As illustrated in FIG. 2, slot #0 is a DL slot, slots #1 to #3 are SBFD slots, and slot #4 is a UL slot.

In some embodiments, a guard band (GB) may exist between a DL subband and a UL subband. The guard band isolates the DL subband and the UL subband in the frequency domain to reduce interference between a DL signal in the DL subband and a UL signal in the UL subband. In an SBFD symbol, the DL subband cannot be used for UL transmission, the UL subband may be used for uplink transmission, and the GB may be used for uplink transmission; or the DL subband cannot be used for UL transmission, the UL subband may be used for uplink transmission, and the GB cannot be used for uplink transmission. On the UL symbol and the F symbol, the entire frequency domain range of the CC may be used for uplink transmission. It may be seen that the frequency domain range available for uplink transmission in an SBFD symbol may be different from the frequency domain range available for uplink transmission on the UL symbol and the F symbol.

In some embodiments, in an SBFD symbol, the frequency domain range available for uplink transmission may be referred to as an uplink frequency domain range, and the frequency domain range not available for uplink transmission may be referred to as a range outside the uplink frequency domain range.

In some embodiments, the uplink frequency domain range may be understood as an uplink frequency domain range on one CC.

In some embodiments, in an SBFD symbol, the uplink frequency domain range on an uplink bandwidth part (BWP) may refer to an overlapping frequency domain range between the uplink BWP and an uplink frequency domain range on one CC. Here, "overlap" may be understood as partial coincidence between the uplink BWP and an uplink frequency domain range of one CC, i.e., there is a portion where the frequency domain range of the uplink BWP coincides with an uplink frequency domain range of one CC.

In some embodiments, in an SBFD symbol, the uplink frequency domain range may be understood as an overlapping frequency domain range between the frequency domain range in which a UL subband is located and an uplink BWP, and may also be understood as an overlapping frequency domain range between the frequency domain range in which a UL subband and a GB are located and an uplink BWP.

In some embodiments, the uplink frequency domain ranges of a non-SBFD symbol and an SBFD symbol are different.

### 2. Available Slot / Non-Available Slot

In some embodiments, an available slot may refer to a slot that may be used by a UE for uplink transmission, or a slot that the UE may use to transmit an uplink signal.

In some embodiments, a non-available slot may refer to a slot that cannot be used by a UE for uplink transmission, a slot that the UE cannot use to transmit an uplink signal, a slot that may be used by the UE for downlink transmission, or a slot that the UE may use to transmit a downlink signal.

In some embodiments, when transmitting an uplink signal, a UE may determine whether a slot may be used for uplink transmission according to the configuration of an access network device. If a slot may be used for uplink transmission, the slot is an available slot. If a slot cannot be used for uplink transmission, the slot is a non-available slot.

By way of example, for different uplink signals, a UE may determine an available slot through one of the following.

Case 1: The uplink signal may be Msg3 with repetition. The UE may transmit a PUSCH carrying Msg3 on K available slots, where K is the number of repetitions.

In some embodiments, the UE receives an SSB and determines the optimal SSB beam. If the power received by the UE on the optimal SSB beam is below a threshold, the UE requests to repeat the transmission of Msg3. In this case, the UE transmits a specific preamble for random access. After receiving the preamble, the access network device determines that the UE requests to repeat the transmission of Msg3.

In some embodiments, K may be determined by one of the following approaches:
Approach 1: 2 bits in the uplink grant (UL grant) of a random access response (RAR) message or in DCI format 0_0 indicate a value in a value set, and the value set may include 4 values. Optionally, the above value set may be determined by the parameter numberOfMsg3-RepetitionList in the uplink BWP common configuration (BWP-Uplink Common). If the parameter numberOfMsg3-RepetitionList is not configured, the above value set may be configured to a default value {1, 2, 3, 4}.

In some embodiments, the above 2 bits may be the 2 most significant bits in the modulation and coding scheme (MCS) field of the RAR UL grant or DCI format 0_0.

Case 2: The uplink signal is a PUSCH with available slot counting, performing repetition according to repetition type A (PUSCH repetition type A with available slot counting). In a case where an available slot counting parameter availableSlotCounting is configured, the PUSCH is transmitted in N×K available slots according to a frequency domain range FD#1 indicated by DCI or configured by radio resource control (RRC). Where N=1, i.e., one TB is transmitted in one available slot.

In some embodiments, the following parameters may be configured in RRC: numberOfRepetitions, pusch-AggregationFactor, and repK.

In some embodiments, K may be determined by one of the following approaches:
Approach 1: Dynamic grant (DG) PUSCH repetition type A. If numberOfRepetitions is configured, then K=numberOfRepetitions; otherwise, if pusch-AggregationFactor is configured, then K=pusch-AggregationFactor; otherwise, K=1.

Approach 2: PUSCH repetition type A is configured by configured grant (CG) type 1 or type 2. If numberOfRepetitions is configured, then K=numberOfRepetitions; otherwise, if repK is configured, then K=repK.

Case 3: The uplink signal may be a transport block over multiple slots with or without repetition.

In some embodiments, the following are configured in RRC: numberOfSlotsTBoMS, numberOfRepetitions. Then, the UE transmits the PUSCH in N×K available slots according to a frequency domain range FD#1 indicated by DCI or configured by RRC. Where N=numberOfSlotsTBoMS, i.e., one TB is transmitted in N available slots, and one TB is repeated K times.

In some embodiments, K may be determined as follows: if numberOfRepetitions is configured, then K=numberOfRepetitions; otherwise K=1.

Case 4: The uplink signal may be a PUCCH with repetition. RRC configures the time-frequency resource location of PUCCH resource #1 on any slot. The UE is instructed to repeatedly transmit a PUCCH using PUCCH resource #1 on K available slots. Where K is the number of repetitions.

In some embodiments, the following parameters related to number of repetitions may be configured in RRC for PUCCH resource #1: pucch-RepetitionNrofSlots, nrofSlots.

In some embodiments, K may be determined as follows: if pucch-RepetitionNrofSlots is configured for PUCCH resource #1, then K=pucch-RepetitionNrofSlots; otherwise, K=nrofSlots.

Case 5: The uplink signal may be multiple PUSCHs scheduled by a single DCI. The hybrid automatic repeat request (HARQ) process identity (ID) indicated by the DCI is applied to the PUSCH on the first available slot. The HARQ process ID for PUSCH transmission on each subsequent available slot is incremented by 1, and after modulo operation, it is taken as the new HARQ process ID.

In some embodiments, if nrofHARQ-ProcessesForPUSCH is configured, the modulus is nrofHARQ-ProcessesForPUSCH; if nrofHARQ-ProcessesForPUSCH is not configured, the modulus is 16.

Case 6: The uplink signal may be an aperiodic sounding reference signal (AP SRS), and in all BWPs configured on one CC, each BWP is configured with at least one SRS resource set, and these resource sets all have a parameter availableSlotOffset. For a triggered SRS resource set #a, according to DCI indication, the UE determines a reference slot #m, and starting from slot #m, transmits one or more AP SRSs in the triggered SRS resource set #a on t+1 available slots.

In some embodiments, the SRS configuration information requires that a higher-layer parameter SRS-PosResource is not configured.

In some embodiments, the SRS provides the access network device with channel information about the UE to the access network device, so that the access network device may perform resource allocation and scheduling better. The UE transmits an SRS to provide channel information from the UE to the access network device, such as channel gain, channel delay. After receiving it, the access network device may perform channel estimation based on the reception of the SRS, adjusting resource allocation and transmission parameters for the UE to better adapt to current channel conditions. This helps optimize the performance of the communication system and improve the reliability and efficiency of data transmission.

In some embodiments, the DCI is DCI that schedules a physical downlink shared channel (PDSCH) and/or a PUSCH.

In some embodiments, the DCI may be DCI format 0_1 or 0_2 that does not include data and does not include a CSI request (DCI format 0-1/0-2).

In some embodiments, the value of m is determined according to n, a higher-layer configuration parameter ca-SlotOffset or slotOffset, etc.

In some embodiments, the value of t is determined as follows: The parameter AvailableSlotOffsetList configured in RRC includes 1 to 4 AvailableSlotOffsets. The UE selects one value from AvailableSlotOffsetList according to an index indicated by the SRS offset indicator (SOI) field in the DCI as t. Optionally, each triggered SRS resource set separately determines a reference slot #m and an available slot count offset t.

In some embodiments, a symbol range of an SRS resource in a slot is determined by startPosition and nrofSymbols. Where nrofSymbols indicates the number of consecutive symbols of nrofSymbols starting from a symbol position startPosition.

Case 7: The uplink signal is a PUCCH carrying a HARQ acknowledgment (ACK) for a semi-persistent scheduling (SPS) PDSCH. The PUCCH carrying the SPS HARQ-ACK may use a PUCCH resource configured in SPS-PUCCH-AN-List in RRC. If SPS-PUCCH-AN-List is not configured, a PUCCH resource configured in n1PUCCH-AN is used.

In some embodiments, the PUCCH resource carrying HARQ-ACK for an SPS PDSCH is configured in RRC: SPS-PUCCH-AN-List and n1PUCCH-AN. Where SPS-PUCCH-AN-List includes SPS-PUCCH-AN, SPS-PUCCH-AN includes sps-PUCCH-AN-ResourceID, and the sps-PUCCH-AN-ResourceID is the configured PUCCH resource.

In some embodiments, in the above cases 1 to 7, the determination of a non-available slot may consider a first condition (which may be denoted as Condition 1). Optionally, Condition 1 may be related to symbol type, SSB, UE capability, and a search space of a PDCCH (indicated by a Type0 PDCCH common search space (CSS), where Type0 PDCCH CSS is associated with a control resource set (CORESET)). The symbol type includes at least one of: DL symbol, UL symbol, or F symbol. In a case where Condition 1 is satisfied, the UE determines that the slot in which the uplink signal is located is a non-available slot.

In some embodiments, for cases 1 to 5, Condition 1 may include Condition 1-1 and Condition 1-2. Where Condition 1-1 is a condition related to symbol type, and Condition 1-2 is a condition related to SSB.

For Condition 1-1: a symbol in which the uplink signal is located includes at least one DL symbol. In this case, the slot in which the uplink signal is located is determined to be a non-available slot. (Denoted as Scheme 1-1-0)
In some embodiments, Scheme 1-1-0 may also be described as: a symbol in which the uplink signal is located overlaps a symbol configured as DL in the uplink-downlink resource configuration configured by tdd-UL-DL-ConfigurationCommon or tdd-UL-DL-ConfigurationDedicated (if configured). In this case, the slot in which the uplink signal is located is determined to be a non-available slot.

For Condition 1-2: a symbol in which the uplink signal is located overlaps a symbol in which an SSB is located. In this case, the slot in which the uplink signal is located is determined to be a non-available slot. (Denoted as Scheme 1-2-0)
In some embodiments, the symbol in which the SSB is located may be configured by the access network device for the UE. By way of example, the access network device configures the symbol in which the SSB is located through ssb-PositionsInBurst.

In some embodiments, for case 6, Condition 1 may include Condition 1-1 and Condition 1-3. Condition 1-3 is a condition related to UE capability.

For Condition 1-1, Scheme 1-1-0 may also be described as: the symbol in which all SRSs in the triggered SRS resource set #a are located overlaps the symbol configured as DL in the uplink-downlink resource configuration configured by tdd-UL-DL-ConfigurationCommon or tdd-UL-DL-ConfigurationDedicated (if configured). In this case, the slot in which the uplink signal is located is determined to be a non-available slot.

For Condition 1-3: an interval between a symbol in which the uplink signal is located and a PDCCH scheduling the uplink signal is less than a minimum time interval corresponding to the UE capability. In this case, the slot in which the uplink signal is located is determined to be a non-available slot. (Denoted as Scheme 1-3-0)
In some embodiments, the symbol in which the uplink signal is located may be the symbol in which all SRSs in the triggered SRS resource set #a are located, and the PDCCH scheduling the uplink signal may be the symbol in which the PDCCH triggering the AP SRS is located.

In some embodiments, in order not to affect the determination of the available slot, during the process of the UE determining the available slot or the non-available slot, there are also behaviors that the UE does not expect to occur. For example, during the process of the UE determining the available slot, the UE does not expect to receive scheduling information or indication information capable of changing the slot configuration that would affect the determination of the available slot.

In some embodiments, from the first symbol of the DCI triggering the AP SRS to the last symbol of all SRSs in the triggered SRS resource set #a, the UE does not expect to receive indication information or scheduling information, to avoid affecting the determination of the available slot by the UE. In this case, the access network device does not transmit indication information or scheduling information to the UE between the symbols. (Denoted as Scheme 1-4-0)
Optionally, the indication information or scheduling information may include: a slot format indicator (SFI) indicating that an F symbol is used for downlink transmission, a DCI indicating downlink transmission on an F symbol, an uplink transmission cancellation indication transmitted on an F symbol, and the like.

In some embodiments, for case 7, Condition 1 may further include Condition 1-1, Condition 1-2, and Condition 1-5. Condition 1-5 is a condition related to the search space of a PDCCH.

For the implementation scheme under Condition 1-1, reference may be made to the aforementioned Scheme 1-1-0, which is not repeated here.

For the implementation scheme under Condition 1-2, reference may be made to the aforementioned Scheme 1-2-0, which is not repeated here.

For Condition 1-5, the symbol in which the uplink signal is located overlaps the symbol in which the Type0-PDCCH CSS set associated with a CORESET is located, in this case, the slot in which the uplink signal is located is determined to be a non-available slot. (Denoted as Scheme 1-5-0)
In some embodiments, FIG. 3 is a schematic diagram of uplink transmission according to an embodiment of the present disclosure. As illustrated in FIG. 3, during uplink transmission, at least one of the following situations may exist:
The frequency domain ranges available for uplink transmission on the SBFD symbol and the UL symbol are different (in FIG. 3, the uplink transmission (denoted as UL) in slots #1 and #2 is on the SBFD symbol, while the uplink transmission in slot #4 is on the UL symbol).

Whether a plurality of slots of UL transmission may span the SBFD symbol and the non-SBFD symbol (in FIG. 3, the uplink transmission in slots #1 and #2 is on the SBFD symbol, while the uplink transmission in slot #4 is on the non-SBFD symbol).

Whether UL transmission in a single slot may span the SBFD symbol and the non-SBFD symbol (in FIG. 3, the uplink transmission in slot #3 is on both the SBFD symbol and the non-SBFD symbol).

Therefore, in an SBFD scenario, when determining whether a slot is an available slot, the above situations should be taken into consideration.

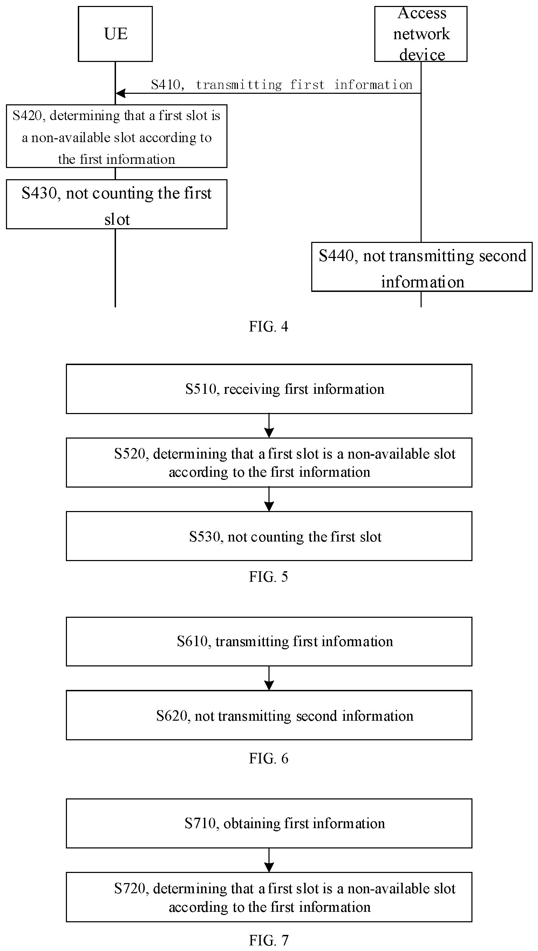

FIG. 4 is an illustrative interaction diagram of a method for determining an uplink transmission resource according to an embodiment of the present disclosure. Embodiments of the present disclosure relate to a method for determining an uplink resource, which is applied to a communication system 100 including an access network device and a UE. As illustrated in FIG. 4, the method includes steps S410 to S440.

In step S410, an access network device transmits first information.

In some embodiments, the UE receives the first information.

In some embodiments, the first information may be carried in signaling, such as Radio Resource Control (RRC), Downlink Control Information (DCI), Media Access Control Control Element (MAC CE), System Information Block 1 (SIB1), and the like.

In some embodiments, the first information is configuration information of an uplink transmission resource (a UL resource) configured by an access network device for a UE.

In some embodiments, the first information may be used to indicate the time-domain resource to be used by the UE for uplink transmission. In this case, the first information may be slot configuration information.

By way of example, the first information may be included in an uplink-downlink common configuration (e.g., tdd-UL-DL-ConfigurationCommon) within RRC. Optionally, if an uplink-downlink dedicated configuration (e.g., tdd-UL-DL-ConfigurationDedicated) is also configured in RRC, then the first information is included in the uplink-downlink dedicated configuration.

In some embodiments, the first information may be used to indicate the symbol type usable by the UE during uplink transmission. By way of example, the symbol type may include at least one of a SBFD symbol or a non-SBFD symbol. Here, the non-SBFD symbol may include a DL symbol, a UL symbol, an F symbol, and the like.

In some embodiments, the first information may further indicate at least one of: multiple uplink transmissions being allowed to use the SBFD symbol and the non-SBFD symbol, and a single uplink transmission being allowed to use only the SBFD symbol or the non-SBFD symbol (Case A); multiple uplink transmissions being allowed to use the SBFD symbol and the non-SBFD symbol, and a single uplink transmission being allowed to use the SBFD symbol and the non-SBFD symbol (Case B); multiple uplink transmissions being allowed to use only the SBFD symbol, and a single uplink transmission being allowed to use only the SBFD symbol (Case C); or multiple uplink transmissions being allowed to use only the non-SBFD symbol, and a single uplink transmission being allowed to use only the non-SBFD symbol (Case D).

By way of example, in Case A, a single uplink transmission is performed only in either the SBFD symbol or the non-SBFD symbol, and thus multiple uplink transmissions are performed in both the SBFD symbol and the non-SBFD symbol. In Case B, a single uplink transmission spans both the SBFD symbol and the non-SBFD symbol, and thus multiple uplink transmissions are performed in both the SBFD symbol and the non-SBFD symbol. In Case C, a single uplink transmission is performed only in the SBFD symbol, and thus multiple uplink transmissions are performed in the SBFD symbol. In Case D, a single uplink transmission is performed only in the non-SBFD symbol, and thus multiple uplink transmissions are performed in the non-SBFD symbol.

In some embodiments, the first information may also be predefined or preconfigured.

In some embodiments, before step S420, the UE may obtain the first information according to a predefined or preconfigured rule.

In step S420, the UE determines that a first slot in which a first uplink signal is located is a non-available slot according to the first information.

In some embodiments, the first uplink signal may be at least one of: an Msg3 with repetition, a PUSCH with available slot counting performing repetition transmission according to repetition type A, a transport block over multiple slots with or without repetition, a PUCCH with repetition, multiple PUSCHs scheduled by a single DCI, an AR SRS, or a PUCCH carrying HARQ ACK for an SPS PDSCH.

In some embodiments, before transmitting the first uplink signal, the UE first determines a time domain resource available for uplink transmission (i.e., an available slot), and then maps the first uplink signal to the available slot for transmission.

In some embodiments, when determining an available slot for the first uplink signal, the UE may first determine the symbol in which the first uplink signal is located, i.e., the symbol used to transmit the first uplink signal (denoted as a first symbol) according to the configuration of the access network device. Then, the UE determines whether the slot in which the first symbol is located (i.e., the first slot) is available. Here, the first slot may be understood as the slot in which the first symbol is located, or may be understood as the slot in which the first uplink signal is located.

It should be noted that there may be one or more first slots. One first slot may be used for one uplink transmission by the UE. The first symbol may include one or more symbols, and one or more symbols may be used for one uplink transmission by the UE.

In some embodiments, for the above different cases, the UE may adopt different schemes to determine whether the first slot is a non-available slot, which may also be called determining whether the first slot is an available slot.

In some embodiments, in the above Case A, Case B, Case C, and Case D, the judgment on a non-available slot of the UE may consider a second condition (which may be denoted as Condition 2). Optionally, Condition 2 may be related to symbol type, SSB, and a search space of a PDCCH (such as Type0-PDCCH CSS). The symbol type includes at least one of: an SBFD symbol, or a non-SBFD symbol. In a case where Condition 2 is satisfied, the UE determines that the first slot is a non-available slot.

In some embodiments, for Case A, Condition 2 may include Condition 2-1, Condition 2-2, and Condition 2-5. Where Condition 2-1 is a condition related to the symbol type, Condition 2-2 is a condition related to the SSB, and Condition 2-5 is a condition related to the search space of a PDCCH.

In some embodiments, for Condition 2-1, the UE may determine that the first slot is a non-available slot through at least one of the following Scheme 2-1-0 or Scheme 2-1-1.

For the implementation under Condition 2-1, reference may be made to the above Scheme 1-1-0, which is not repeated here. (Denoted as Scheme 2-1-0)
For Condition 2-1, the first symbol includes an SBFD symbol and a non-SBFD symbol. In this case, the UE determines that the first slot is a non-available slot. (Denoted as Scheme 2-1-1)
In some embodiments, for Condition 2-2, the UE may determine that the first slot is a non-available slot through at least one of the following Scheme 2-2-0, Scheme 2-2-1, or Scheme 2-2-2.

For the implementation under Condition 2-2, reference may be made to the above Scheme 1-2-0, which is not repeated here. (Denoted as Scheme 2-2-0)
For Condition 2-2, at least one of the symbols in which the first uplink signal is located overlaps a symbol in which a first SSB is located, and an overlapping symbol is the non-SBFD symbol. In this case, the UE determines that the first slot is a non-available slot. (Denoted as Scheme 2-2-1)
In some embodiments, the symbol in which the first SSB is located is configured by the access network device through ssb-PositionsInBurst.

For Condition 2-2, at least one of the symbols in which the first uplink signal is located overlaps a symbol in which a first SSB is located, an overlapping symbol is the SBFD symbol, and the first SSB is configured for the UE to perform measurement. In this case, the UE determines that the first slot is a non-available slot. (Denoted as Scheme 2-2-2)
In some embodiments, the access network device configures the UE via RRC to perform measurement on the first SSB.

In some embodiments, for Condition 2-5, the UE may determine that the first slot is a non-available slot through at least one of the following Scheme 2-5-0, Scheme 2-5-1, or Scheme 2-5-2.

For the implementation scheme under Condition 2-5, reference may be made to the aforementioned Scheme 1-5-0, which is not repeated here.(Denoted as Scheme 2-5-0)

For Condition 2-5, at least one of the symbols in which the first uplink signal is located overlaps a symbol in which a search space of a first PDCCH is located, and an overlapping symbol is the non-SBFD symbol. In this case, the UE determines that the first slot is a non-available slot.

### (Denoted as Scheme 2-5-1)

In some embodiments, the search space of the first PDCCH is configured by the access network device through Type0-PDCCH CSS. In this case, Type0-PDCCH CSS is associated with CORESET0.

For Condition 2-5, at least one of the symbols in which the first uplink signal is located overlaps a symbol in which a search space of a first PDCCH is located, an overlapping symbol is the SBFD symbol, and the search space of the first PDCCH is configured for the UE to receive a PDCCH signal. In this case, the UE determines that the first slot is a non-available slot. (Denoted as Scheme 2-5-2)
In some embodiments, the access network device configures the UE via RRC to receive the PDCCH signal in the search space of the first PDCCH for PDCCH blind detection.

In some embodiments, for Case B, Condition 2 may include Condition 2-1, Condition 2-2, and Condition 2-5. Where Condition 2-1 is a condition related to the symbol type, Condition 2-2 is a condition related to the SSB, and Condition 2-5 is a condition related to the search space of a PDCCH.

In some embodiments, for Condition 2-1, the UE may determine that the first slot is a non-available slot through the above Scheme 2-1-0, which is not repeated here.

In some embodiments, for Condition 2-2, the UE may determine that the first slot is a non-available slot through at least one of the above Scheme 2-2-0, Scheme 2-2-1, or Scheme 2-2-2, which is not repeated here.

In some embodiments, for Condition 2-5, the UE may determine that the first slot is a non-available slot through at least one of the above Scheme 2-5-0, Scheme 2-5-1, or Scheme 2-5-2, which is not repeated here.

In some embodiments, for Case C, Condition 2 may include Condition 2-1, Condition 2-2, and Condition 2-5. Where Condition 2-1 is a condition related to the symbol type, Condition 2-2 is a condition related to the SSB, and Condition 2-5 is a condition related to the search space of a PDCCH.

In some embodiments, for Condition 2-1, the UE may determine that the first slot is a non-available slot through the following Scheme 2-1-2.

For Condition 2-1, at least one of the symbols in which the first uplink signal is located is the non-SBFD symbol. In this case, the UE determines that the first slot is a non-available slot.

### (Denoted as Scheme 2-1-2)

In some embodiments, for Condition 2-2, the UE may determine that the first slot is a non-available slot through at least one of the above Scheme 2-2-0 or Scheme 2-2-2, which is not repeated here.

In some embodiments, for Condition 2-5, the UE may determine that the first slot is a non-available slot through at least one of the above Scheme 2-5-0 or Scheme 2-5-2, which is not repeated here.

In some embodiments, for Case D, Condition 2 may include Condition 2-1, Condition 2-2, and Condition 2-5. Where Condition 2-1 is a condition related to the symbol type, Condition 2-2 is a condition related to the SSB, and Condition 2-5 is a condition related to the search space of a PDCCH.

In some embodiments, for Condition 2-1, the UE may determine that the first slot is a non-available slot through the following Scheme 2-1-3.

For Condition 2-1, at least one of the symbols in which the first uplink signal is located overlaps a DL symbol configured for the UE by the access network device, or at least one of the symbols in which the first uplink signal is located is an SBFD symbol. In this case, the UE determines that the first slot is a non-available slot. (Denoted as Scheme 2-1-3)
In some embodiments, for Condition 2-2, the UE may determine that the first slot is a non-available slot through the above Scheme 2-2-0, which is not repeated here.

In some embodiments, for Condition 2-5, the UE may determine that the first slot is a non-available slot through the above Scheme 2-5-0, which is not repeated here.

It should be noted that the above specific schemes are only some examples of Condition 2 and do not specifically limit the condition. In embodiments of the present disclosure, the above specific schemes may be arbitrarily combined or replaced in the absence of conflict.

In step S430, the UE does not count the first slot.

In some embodiments, the UE does not count the first slot, which may be described as the UE excluding the first slot from slots used for uplink transmission. In an embodiment, the access network device may configure for the UE the number of slots used for one uplink transmission, such as nrofSlots in RRC. When determining the slots used for uplink transmission, the UE counts the determined available slots until the configured number of slots is satisfied, and then the UE transmits the uplink transmission.

In some embodiments, in the above Case A, Case B, Case C, and Case D, the judgment on not counting a slot by the UE may consider a third condition (which may be denoted as Condition 3). Optionally, Condition 3 may be related to UE capability and uplink frequency domain range. In a case where Condition 3 is satisfied, the UE determines not to count the first slot.

In some embodiments, for the above Case A, Case B, Case C, and Case D, Condition 3 may include Condition 3-1. Condition 3-1 is a condition related to UE capability.

For the implementation under Condition 3-1, reference may be made to the above Scheme 1-3-0, which is not repeated here. (Denoted as Scheme 3-1-0) In this case, the PDCCH scheduling the first uplink signal is the second PDCCH.

In some embodiments, for the above Case A, Case B, and Case C, Condition 3 may include Condition 3-2. Where Condition 3-2 is a condition related to uplink frequency domain range.

For Condition 3-2, a frequency domain range of the first uplink signal on at least one SBFD symbol overlaps a range outside an uplink frequency domain range configured for the UE on the at least one SBFD symbol. In this case, the UE determines not to count the first slot, i.e., the UE may exclude the first slot from slots used for uplink transmission. (Denoted as Scheme 3-2-1)
In some embodiments, in an SBFD symbol, the uplink frequency domain range may be understood as an overlapping frequency domain range between the frequency domain range in which a UL subband is located and an uplink BWP, and may also be understood as an overlapping frequency domain range between the frequency domain range in which a UL subband and a GB are located and an uplink BWP.

In some embodiments, the judgment on a non-available slot by the UE may also consider the third condition (Condition 3).

In some embodiments, the schemes in Condition 2-1 and Condition 2-2 may be applied to the above cases 1 to 5. The schemes in Condition 2-1 and Condition 3-1 may be applied to the above case 6. The schemes in Condition 2-1, Condition 2-2, and Condition 2-5 may be applied to the above case 7.

In step S440, the access network device does not transmit second information.

In some embodiments, the terminal does not receive the second information.

In some embodiments, the second information is information that the UE does not expect to receive.

In some embodiments, the second information is used to trigger the UE to adjust the available slot. Here, terms such as "adjust", "re-determine", "change", "update" may be interchangeable.

In some embodiments, the second information may include: an SFI indicating that an F symbol is used for downlink transmission, a DCI indicating downlink transmission on an F symbol, an uplink transmission cancellation indication transmitted on an F symbol, SBFD symbol type indication signaling, etc. Where the SBFD symbol type indication signaling is used to instruct the UE to modify a non-SBFD symbol to an SBFD symbol, or to instruct the UE to modify an SBFD symbol to a non-SBFD symbol.

In some embodiments, from the beginning of the first symbol of the symbols in which the first DCI is located, until the end of the last symbol of the symbols in which the SRS in the first aperiodic SRS resource set triggered by the first DCI is located, the access network device does not transmit the second information.

In some embodiments, during the process of determining the non-available slot, the UE may also determine the available slot and transmit the first uplink information on the available slot.

In some embodiments, the access network device receives the first uplink information on the available slot.

In some embodiments, in a case where the above conditions are not satisfied, the first slot is an available slot.

The application of a plurality of schemes under the above different conditions in cases 1 to 7 is explained below.

In some embodiments, for cases 1, 2, 3, 4, and 5, when judging whether the first slot is a non-available slot, the UE may consider the schemes in Condition 2-1, Condition 2-2, and Condition 3-2.

In some embodiments, for case 6, when judging whether the first slot is a non-available slot, the UE may consider the schemes in Condition 2-1, Condition 3-1, and Condition 3-2.

In some embodiments, for case 7, when judging whether the first slot is a non-available slot, the UE may consider the schemes in Condition 2-1, Condition 2-2, Condition 2-5, and Condition 3-2.

At this point, the process of the UE determining that the first slot is a non-available slot is completed.

The method for determining an uplink transmission resource involved in embodiments of the present disclosure may include at least one of steps S410 to S440. For example, steps S410 to S420 may be implemented as an independent embodiment. For example, the combination of steps S410 to S430 may be implemented as an independent embodiment. For example, the combination of steps S420 to S440 may be implemented as an independent embodiment. For example, the combination of steps S420 to S430 may be implemented as an independent embodiment. For example, step S410 may be implemented as an independent embodiment. For example, step S420 may be implemented as an independent embodiment. It should be noted that possible independent embodiments composed of one or more of steps S410 to S440 are not limited to these.

In some embodiments, steps S410, S430, S440 are optional. In different embodiments, one or more of these steps may be omitted or substituted.

In embodiments of the present disclosure, in an SBFD scenario, the UE determines whether the slot in which the first uplink signal is located is a non-available slot according to the first information, implementing the process of a terminal determining a non-available slot in an SBFD scenario.

In some embodiments, the names of information, etc., are not limited to the names recorded in the embodiments. Terms such as "information", "message", "signal", "signaling", "report", "configuration", "indication", "instruction", "command", "channel", "parameter", "field", "field", "symbol", "code element", "codebook", "codeword", "codepoint", "bit", "data", "program", "chip" may be interchangeable.

In some embodiments, terms such as "moment", "time point", "time", "time position" may be interchangeable. Terms such as "duration", "time period", "time window", "window", "time" may be interchangeable.

In some embodiments, "obtain", "acquire", "receive", "transmit", "two-way transmission", "send and/or receive" may be interchangeable, and may be interpreted as receiving from another entity, obtaining from a protocol, obtaining from a higher layer, obtaining through own processing, self-implementation, and other meanings.

In some embodiments, terms such as "send", "transmit", "report", "deliver", "transmit", "two-way transmission", "send and/or receive" may be interchangeable.

In some embodiments, terms such as "certain", "preset", "pre-set", "set", "indicated", "a certain", "any", "first" may be interchangeable. "Specific A", "preset A", "pre-set A", "set A", "indicated A", "a certain A", "any A", "first A" may be interpreted as A predefined in a protocol, etc., or may be interpreted as A obtained through setting, configuration, or indication, etc., or may be interpreted as specific A, a certain A, any A, or first A, etc., but not limited thereto.

In some embodiments, determination or judgment may be performed through a value represented by 1 bit (0 or 1), or through a true/false value (Boolean value) represented by true or false, or through numerical comparison (e.g., comparison with a predetermined value), but not limited thereto.

FIG. 5 is an illustrative flowchart of a method for determining an uplink transmission resource performed on a terminal side according to an embodiment of the present disclosure. Embodiments of the present disclosure relate to a method for determining an uplink transmission resource, applied to a terminal, such as a UE. As illustrated in FIG. 5, the method includes steps S510 to S530.

In step S510, first information is received.

Optional implementation manner of step S510 may refer to the optional manner of step S410 in FIG. 4 and other related parts in the embodiments involving FIG. 4, which is not repeated here.

In some embodiments, the terminal (e.g., UE) receives the first information transmitted by a network device (e.g., an access network device), but it is not limited thereto, and may also receive the first information from other entities.

In some embodiments, the terminal may also obtain the first information according to a predefined or preconfigured rule.

In step S520, it is determined that a first slot in which a first uplink signal is located is a non-available slot according to the first information.

Optional implementation manner of step S520 may refer to the optional manner of steps S420 and S430 in FIG. 4 and other related parts in the embodiments involving FIG. 4, which is not repeated here.

In step S530, the first slot is not counted.

Optional implementation manner of step S530 may refer to the optional manner of step S430 in FIG. 4 and other related parts in the embodiments involving FIG. 4, which is not repeated here.

The method for determining an uplink transmission resource involved in embodiments of the present disclosure may include at least one of steps S510 to S530. For example, steps S510, S520, and S530 may be implemented as an independent embodiment. For example, the combination of steps S520 to S530 may be implemented as an independent embodiment. For example, step S510 may be implemented as an independent embodiment. For example, step S520 may be implemented as an independent embodiment. It should be noted that possible independent embodiments composed of one or more of steps S510 to S530 are not limited to these.

In some embodiments, steps S520 and S530 may be exchanged in order or executed simultaneously.

In some embodiments, steps S510 and S530 are optional. In different embodiments, one or more of these steps may be omitted or substituted.

FIG. 6 is an illustrative flowchart of a method for determining an uplink transmission resource performed on a network device side according to an embodiment of the present disclosure. Embodiments of the present disclosure relate to a method for determining an uplink transmission resource, applied to a network device, such as an access network device. As illustrated in FIG. 6, the method includes steps S610 to S620.

In step S610, first information is transmitted.

Optional implementation manner of step S610 may refer to the optional manner of step S410 in FIG. 4 and other related parts in the embodiments involving FIG. 4, which is not repeated here.

In some embodiments, the network device (e.g., access network device) transmits the first information to the terminal (e.g., UE), but it is not limited thereto, and may also transmit the first information to other entities.

In step S620, second information is not transmitted.

Optional implementation manner of step S620 may refer to the optional manner of step S440 in FIG. 4 and other related parts in the embodiments involving FIG. 4, which is not repeated here.

In some embodiments, the network device (e.g., access network device) does not transmit the second information to the terminal (e.g., UE), but it is not limited thereto, and may also not transmit it to other entities.

It should be noted that terms such as "not transmitting information", "stopping transmitting second information", "canceling transmitting second information", "and prohibiting transmitting second information" may be interchangeable.

The method for determining an uplink transmission resource involved in embodiments of the present disclosure may include at least one of steps S610 and S620. For example, step S610 may be implemented as an independent embodiment. For example, step S620 may be implemented as an independent embodiment. It should be noted that possible independent embodiments composed of one or more of steps S610 to S620 are not limited to these.

In some embodiments, step S620 is optional. In different embodiments, one or more of these steps may be omitted or substituted.

FIG. 7 is another illustrative flowchart of a method for determining an uplink transmission resource performed on a terminal side according to an embodiment of the present disclosure. Embodiments of the present disclosure relate to a method for determining an uplink transmission resource, applied to a terminal, such as the UE. As illustrated in FIG. 7, the method includes steps S710 to S720.

In step S710, first information is obtained.

Optional implementation manner of step S710 may refer to the optional manner of step S410 in FIG. 4 and other related parts in the embodiments involving FIG. 4, which is not repeated here.

In some embodiments, the terminal (e.g., UE) receives the first information transmitted by a network device (e.g., an access network device), but it is not limited thereto, and may also receive the first information from other entities.

In some embodiments, the terminal may also obtain the first information according to a predefined or preconfigured rule.

In step S720, it is determined that a first slot in which a first uplink signal is located is a non-available slot according to the first information.

Optional implementation manner of step S720 may refer to the optional manner of steps S420 and S430 in FIG. 4 and other related parts in the embodiments involving FIG. 4, which is not repeated here.

The method for determining an uplink transmission resource involved in embodiments of the present disclosure may include at least one of steps S6110 to S6130.

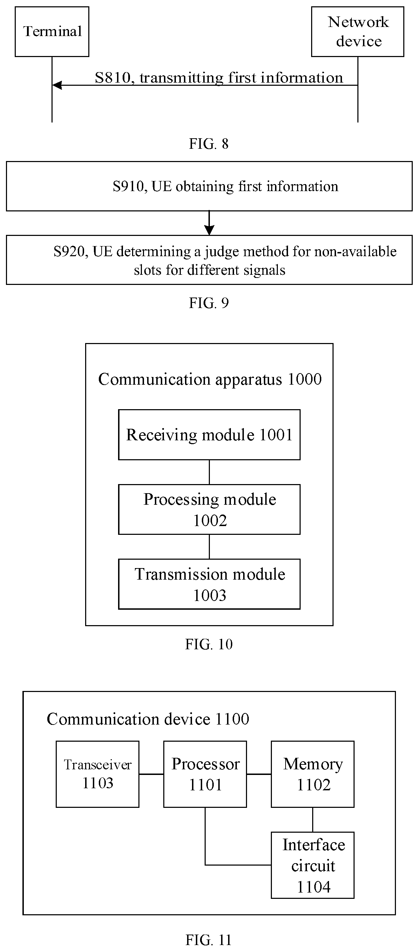

FIG. 8 is another illustrative flowchart of a method for determining an uplink transmission resource performed on a network device side according to an embodiment of the present disclosure. Embodiments of the present disclosure relate to a method for determining an uplink transmission resource, applied to a network device, such as the access network device. As illustrated in FIG. 8, the method includes step S810.

In step S810, first information is transmitted.

Optional implementation manner of step S810 may refer to the optional manner of step S410 in FIG. 4 and other related parts in the embodiments involving FIG. 4, which is not repeated here.

In some embodiments, the network device (e.g., access network device) transmits second information to the terminal, but it is not limited thereto, and may also transmit the second information to other entities.

FIG. 9 is another illustrative interaction diagram of a method for determining an uplink transmission resource according to an embodiment of the present disclosure. As illustrated in FIG. 9, the method for determining an uplink transmission resource in embodiments of the present disclosure includes steps S910 to S920.

In step S910, a terminal (such as the UE) obtains first information to indicate a symbol type usable for uplink (UL) transmission.

In some embodiments, the first information may be defaulted by protocol or indicated by at least one of RRC, DCI, MAC CE, or SIB1.

In some embodiments, the content of the first information includes at least one of:
multiple UL transmissions being allowed to use both the SBFD symbol and the non-SBFD symbol, and a single UL transmission being allowed to use only the SBFD symbol or the non-SBFD symbol;
multiple UL transmissions being allowed to use both the SBFD symbol and the non-SBFD symbol, and a single UL transmission being allowed to use both the SBFD symbol and the non-SBFD symbol;
multiple UL transmissions being allowed to use only the SBFD symbol, and a single UL transmission being allowed to use only the SBFD symbol; or
multiple UL transmissions being allowed to use only the non-SBFD symbol, and a single UL transmission being allowed to use only the non-SBFD symbol.

In step S920, the UE determines a judgment method for non-available slots for different signals.

In some embodiments, for the UE to judge a slot as a non-available slot, the following conditions and/or UE unexpected behaviors need to be considered:
Condition 2-1, related to the symbol type (i.e., the Scheme 2-1-0): A symbol in which the uplink (UL) signal (i.e., the first uplink signal) is located (i.e., the first symbol) overlaps a DL symbol configured by tdd-UL-DL-ConfigurationCommon or tdd-UL-DL-ConfigurationDedicated (if configured).
Condition 2-2, related to the SSB (i.e., the Scheme 2-2-0): A symbol in which the UL signal is located overlaps a symbol in which an SSB configured in ssb-PositionsInBurst (i.e., the first SSB) is located.
Condition 3-1, related to UE capability (i.e., the Scheme 3-1-0): The interval between a symbol in which the UL signal is located and a PDCCH (i.e., the second PDCCH) scheduling the UL signal is less than a minimum time interval corresponding to the UE capability.

In some embodiments, the Scheme 3-1-0 may also be described as: The interval between a symbol in which all SRSs in the triggered SRS resource set #a are located and the PDCCH triggering the AP SRS is less than the minimum time interval corresponding to the UE capability.

Condition 2-5, related to Type0-PDCCH CSS (i.e., the Scheme 2-5-0): A symbol in which the UL signal is located overlaps a symbol in which a Type0-PDCCH (i.e., the first PDCCH) CSS set associated with a CORESET is located.

In some embodiments, the UE unexpected behaviors include the following scheme:
Scheme 2-4-0: From the first symbol of the DCI (i.e., the first DCI) triggering the AP SRS to the last symbol of one or more AP SRS transmissions, the UE does not expect to receive indication information or scheduling information that would affect the determination of the available slot. For example: SFI indicating that an F symbol is DL; DCI indicating DL transmission on an F symbol; receiving an UL transmission cancellation indication on an F symbol.

In some embodiments, Scheme 1 (i.e., Case A): multiple transmissions are allowed to use both the SBFD symbol and the non-SBFD symbol, and a single transmission is allowed to use only the SBFD symbol or the non-SBFD symbol. In this case, the conditions for a slot to be a non-available slot are as follows:
For Condition 2-1, the implementation scheme is Scheme 2-1-0.
For Condition 2-1, the implementation scheme is Scheme 2-1-1, i.e., the symbol in which the UL signal is located includes both the SBFD symbol and the non-SBFD symbol.
For Condition 2-2, the implementation scheme is Scheme 2-2-0.
For Condition 2-2, the implementation scheme is Scheme 2-2-1, i.e., at least one of symbols in which the UL signal is located overlaps a symbol in which an SSB is located, and the overlapping symbol is the non-SBFD symbol.
For Condition 2-2, the implementation scheme is Scheme 2-2-2, i.e., at least one of symbols in which the UL signal is located overlaps a symbol in which an SSB is located, the overlapping symbol is the SBFD symbol, and Condition A is satisfied: RRC configures the UE to perform measurement on the SSB.
For Condition 2-5, the implementation scheme is Scheme 2-5-0.
For Condition 2-5, the implementation scheme is Scheme 2-5-1, i.e., at least one of symbols in which the UL signal is located overlaps a symbol in which a Type0-PDCCH CSS set is located, and the overlapping symbol is the non-SBFD symbol.
For Condition 2-5, the implementation scheme is Scheme 2-5-2, i.e., at least one of symbols in which the UL signal is located overlaps a symbol in which a Type0-PDCCH (first PDCCH) CSS set associated with a CORESET is located, the overlapping symbol is the SBFD symbol, and Condition B is satisfied: RRC configures the UE to receive the PDCCH signal in the Type0-PDCCH CSS associated with the CORESET.

In some embodiments, Scheme 2 (i.e., Case B): multiple transmissions are allowed to use both the SBFD symbol and the non-SBFD symbol, and a single transmission is allowed to use both the SBFD symbol and the non-SBFD symbol. In this case, the conditions for a slot to be a non-available slot are as follows:
For Condition 2-1, the implementation scheme is Scheme 2-1-0.
For Condition 2-2, the implementation scheme is at least one of Scheme 2-2-0, Scheme 2-2-1, or Scheme 2-2-2.
For Condition 2-5, the implementation scheme is at least one of Scheme 2-5-0, Scheme 2-5-1, or Scheme 2-5-2.

In some embodiments, Scheme 3 (i.e., Case C): multiple transmissions are allowed to use only the SBFD symbol, and a single transmission is allowed to use only the SBFD symbol. In this case, the conditions for a slot to be a non-available slot are as follows:
For Condition 2-1, the implementation scheme is Scheme 2-1-2, i.e., in a slot, at least one symbol in which a PUSCH is located is a non-SBFD symbol.
For Condition 2-2, the implementation scheme is at least one of Scheme 2-2-0 or Scheme 2-2-2.
For Condition 2-5, the implementation scheme is at least one of Scheme 2-5-0 or Scheme 2-5-2.

In some embodiments, Scheme 4 (i.e., Case D): multiple transmissions are allowed to use only the non-SBFD symbol, and a single transmission is allowed to use only the non-SBFD symbol. In this case, the conditions for a slot to be a non-available slot are as follows:
For Condition 2-1, the implementation scheme is Scheme 2-1-3, i.e., in a slot, at least one symbol in which a PUSCH is located is a DL symbol or an SBFD symbol.
For Condition 2-2, the implementation scheme is Scheme 2-2-0.
For Condition 2-5, the implementation scheme is Scheme 2-5-0.

In some embodiments, in Schemes 1, 2, 3, and 4, the condition for not counting a slot is as follows:
For Condition 3-1, the implementation scheme is Scheme 3-1-0.

In some embodiments, in Schemes 1, 2, and 3, the condition (frequency domain range) for not counting a slot is as follows:
For Condition 3-2, the implementation scheme is Scheme 3-2-1, i.e., the frequency domain resource for UL transmission on an SBFD symbol indicated by DCI or configured by RRC is partially outside the UL frequency domain range.

Option 1: The UL frequency domain range is the overlapping frequency domain range between the frequency domain range in which a UL subband is located and a UL BWP.

Option 2: The UL frequency domain range is the overlapping frequency domain range between the frequency domain range in which a UL subband and a GB are located and a UL BWP.

In some embodiments, in Schemes 1, 2, 3, and 4, the situation that the UE does not expect to occur is as follows:
For Condition 2-4, the implementation scheme is Scheme 2-4-0, i.e., from the first symbol of the DCI triggering the AP SRS to the last symbol of all SRSs in the triggered SRS resource set #a, the UE does not expect to receive indication information or scheduling information that would affect the determination of the available slot. For example: SFI indicating that an F symbol is DL; DCI indicating DL transmission on an F symbol; receiving an UL transmission cancellation indication on an F symbol. For another example: The UE does not expect SBFD symbol type indication signaling that may affect the judgment of the available slot to modify a non-SBFD symbol to an SBFD symbol or modify an SBFD symbol to a non-SBFD symbol.

In some embodiments, the following are applications of Schemes 1 to 4:
First aspect: For Msg3 with repetition, PUSCH repetition type A with available slot counting, TBoMS with/without repetition, PUCCH repetition, and multiple PUSCH transmissions scheduled by a single DCI, when judging a non-available slot, consider the schemes in Condition 2-1, Condition 2-2, and Condition 3-2.

Second aspect: For AP SRS transmission, when judging a non-available slot, consider the schemes in Condition 2-1, Condition 3-1, and Condition 3-2, and the UE unexpected behavior uses Scheme 2-4-0.

Optionally, the UL signal in Conditions 2-1 and 3-2 refers to the SRS signals on all SRS resources in the triggered SRS resource set #a.

Third aspect: For a PUCCH transmission carrying HARQ-ACK for an SPS PDSCH, when judging a non-available slot, consider the schemes in Conditions 2-1, 2-2, 2-5, and 3-2.

In embodiments of the present disclosure, some or all of the steps, optional implementations thereof, may be arbitrarily combined with some or all of the steps in other embodiments, and may be arbitrarily combined with optional implementations of other embodiments.

Embodiments of the present disclosure also provide an apparatus for implementing any of the above methods. For example, an embodiment of the present disclosure provide an apparatus. The apparatus includes units or modules for implementing the steps performed by the terminal in any of the above methods. For another example, another apparatus is provided, including units or modules for implementing the steps performed by a network device (e.g., an access network device, or a core network device, etc.) in any of the above methods.

It should be understood that the division of units or modules in the above apparatus is only a division of logical functions. In actual implementation, they may be fully or partially integrated into one physical entity, or may be physically separate. Additionally, the units or modules in the apparatus may be implemented in the form of software called by a processor. For example, the apparatus includes a processor connected to a memory storing instructions. The processor calls the instructions stored in the memory to implement any of the above methods or the functions of the units/modules of the apparatus. The processor may be a general-purpose processor, such as a Central Processing Unit (CPU) or a microprocessor, and the memory may be internal or external to the apparatus. Alternatively, the units or modules in the apparatus may be implemented in the form of hardware circuits. The functions of some or all units/modules may be realized by designing the hardware circuit. The hardware circuit may be understood as one or more processors. For example, in one implementation, the hardware circuit is an Application-Specific Integrated Circuit (ASIC), realizing the functions of some or all units/modules by designing the logical relationships among circuit components. In another implementation, the hardware circuit may be implemented using a Programmable Logic Device (PLD). Taking a Field Programmable Gate Array (FPGA) as an example, it may include a large number of logic gates. The connection relationships between the logic gates are configured via configuration files to realize the functions of some or all units/modules. All units or modules of the above apparatus may be implemented entirely via software called by a processor, or entirely via hardware circuits, or partially via software called by a processor and the remaining part via hardware circuits.

In embodiments of the present disclosure, the processor is a circuit having signal processing capabilities, and in an implementation, the processor may be a circuit having instruction reading and running capabilities, such as a central processing unit (CPU), a microprocessor, a graphics processing unit (GPU) (which may be understood as a microprocessor), or a digital signal processor (DSP), etc.; in another implementation, the processor may implement certain functions through the logical relationship of hardware circuits that are fixed or reconfigurable, for example, the processor is a hardware circuit implemented by an application-specific integrated circuit (ASIC) or a programmable logic device (PLD), such as an FPGA. In the reconfigurable hardware circuit, the process in which the processor loads a configuration document to implement the configuration of the hardware circuit may be understood as the process in which the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 10 is an illustrative block diagram of a communication apparatus according to an embodiment of the present disclosure. As illustrated in FIG. 10, a communication apparatus 1000 may include at least one of a receiving module 1001, a processing module 1002, or a transmission module 1003.

In some embodiments, the communication apparatus 1000 may be arranged in a terminal.

In some embodiments, the processing module 1002 is configured to obtain first information, where the first information indicates a symbol type usable for uplink transmission, and the symbol type includes at least one of an SBFD symbol or a non-SBFD symbol; and determine whether a first slot in which a first uplink signal is located is a non-available slot according to the first information.

In some embodiments, the non-SBFD symbol includes at least one of: a DL symbol, a UL symbol, or an F symbol.

In some embodiments, the receiving module 1001 is configured to receive the first information.

In some embodiments, the first information is further used to indicate at least one of: multiple uplink transmissions being allowed to use the SBFD symbol and the non-SBFD symbol, and a single uplink transmission being allowed to use only the SBFD symbol or the non-SBFD symbol; multiple uplink transmissions being allowed to use the SBFD symbol and the non-SBFD symbol, and a single uplink transmission being allowed to use the SBFD symbol and the non-SBFD symbol; multiple uplink transmissions being allowed to use only the SBFD symbol, and a single uplink transmission being allowed to use only the SBFD symbol; or multiple uplink transmissions being allowed to use only the non-SBFD symbol, and a single uplink transmission being allowed to use only the non-SBFD symbol.

In some embodiments, in a case where the first information indicates that multiple uplink transmissions are allowed to use the SBFD symbol and the non-SBFD symbol, and a single uplink transmission is allowed to use only the SBFD symbol or the non-SBFD symbol, the first slot is a non-available slot if at least one of the following conditions is satisfied: a symbol in which the first uplink signal is located includes the SBFD symbol and the non-SBFD symbol; at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive the PDCCH signal.

In some embodiments, in a case where the first information indicates that multiple uplink transmissions are allowed to use the SBFD symbol and the non-SBFD symbol, and a single uplink transmission is allowed to use the SBFD symbol and the non-SBFD symbol, the first slot is a non-available slot if at least one of the following conditions is satisfied: at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive the PDCCH signal.

In some embodiments, in a case where the first information indicates that the multiple uplink transmissions are allowed to use only the SBFD symbol, and the single uplink transmission is allowed to use only the SBFD symbol, the first slot is a non-available slot if at least one of the following conditions is satisfied: at least one of symbols in which a PUSCH in the first slot is located is the non-SBFD symbol; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In some embodiments, the processing module 1002 is further configured to: determine that a symbol in which the first uplink signal is located includes at least one SBFD symbol according to the first information; and exclude the first slot from slots used for the uplink transmission in a case where a frequency domain range of the first uplink signal on at least one SBFD symbol overlaps a range outside an uplink frequency domain range on the at least one SBFD symbol.

In some embodiments, the uplink frequency domain range on the at least one SBFD symbol is one of: there is an overlapping frequency domain range between a frequency domain range in which an uplink subband on the at least one SBFD symbol is located and an uplink BWP of the terminal; or there is an overlapping frequency domain range between a frequency domain range in which an uplink subband and a guard band on the at least one SBFD symbol are located and an uplink BWP of the terminal.

In some embodiments, in a case where the first information indicates that the multiple uplink transmissions are allowed to use only the non-SBFD symbol, and the single uplink transmission is allowed to use only the non-SBFD symbol, the first slot is a non-available slot if at least one of the following conditions is satisfied: at least one of symbols in which the first uplink signal is located overlaps a downlink symbol configured for the terminal; or at least one of symbols in which the first uplink signal is located is the SBFD symbol.

In some embodiments, the first slot is a non-available slot if at least one of the following conditions is satisfied: a symbol in which the first uplink signal is located overlaps a downlink symbol configured for the terminal; a symbol in which the first uplink signal is located overlaps a symbol in which a first SSB is located, and the first SSB is configured by a network device for the terminal; or at least one of symbols in which the first uplink signal is located overlaps a symbol in which a search space of a first PDCCH is located, and the search space of the first PDCCH is configured by the network device for the terminal

In some embodiments, the processing module 1002 is further configured to: exclude the first slot from slots used for the uplink transmission in a case where an interval between a symbol in which the first uplink signal is located and a symbol in which a second PDCCH is located is less than a minimum time interval corresponding to a terminal capability of the terminal, where the second PDCCH is used to schedule the first uplink signal.

In an embodiment, the transmission module 1003 is configured to transmit the first uplink signal on an available slot.

In some embodiments, the communication apparatus 1000 may be arranged in a network device.

In some embodiments, the transmission module 1003 is configured to transmit first information, where the first information indicates a symbol type usable for uplink transmission, and the symbol type includes at least one of an SBFD symbol or a non-SBFD symbol.

In some embodiments, the non-SBFD symbol includes at least one of: a DL symbol, a UL symbol, or an F symbol.

In some embodiments, the first information is further used to indicate at least one of: multiple uplink transmissions being allowed to use the SBFD symbol and the non-SBFD symbol, and a single uplink transmission being allowed to use only the SBFD symbol or the non-SBFD symbol; multiple uplink transmissions being allowed to use the SBFD symbol and the non-SBFD symbol, and a single uplink transmission being allowed to use the SBFD symbol and the non-SBFD symbol; multiple uplink transmissions being allowed to use only the SBFD symbol, and a single uplink transmission being allowed to use only the SBFD symbol; or multiple uplink transmissions being allowed to use only the non-SBFD symbol, and a single uplink transmission being allowed to use only the non-SBFD symbol.

In some embodiments, in a case where the first information indicates that multiple uplink transmissions are allowed to use the SBFD symbol and the non-SBFD symbol, and a single uplink transmission is allowed to use only the SBFD symbol or the non-SBFD symbol, the first slot is a non-available slot if at least one of the following conditions is satisfied: a symbol in which the first uplink signal is located includes the SBFD symbol and the non-SBFD symbol; at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In some embodiments, in a case where the first information indicates that the multiple uplink transmissions are allowed to use the SBFD symbol and the non-SBFD symbol, and the single uplink transmission is allowed to use the SBFD symbol and the non-SBFD symbol, the first slot is a non-available slot if at least one of the following conditions is satisfied: at least one of symbols in which the first uplink signal is located overlaps a symbol in which a first SSB is located, an overlapping symbol is the non-SBFD symbol, and the first SSB is configured by a network device for the terminal; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of a first PDCCH is located, an overlapping symbol is the non-SBFD symbol, and the search space of the first PDCCH is configured by the network device for the terminal; or at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In some embodiments, in a case where the first information indicates that the multiple uplink transmissions are allowed to use only the SBFD symbol, and the single uplink transmission is allowed to use only the SBFD symbol, the first slot is a non-available slot if at least one of the following conditions is satisfied: at least one of symbols in which a PUSCH in the first slot is located is the non-SBFD symbol; at least one of symbols in which the first uplink signal is located overlaps a symbol in which a first SSB is located, an overlapping symbol is the SBFD symbol, and the first SSB is configured for the terminal to perform measurement; at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

In some embodiments, in a case where the first information indicates that the multiple uplink transmissions are allowed to use only the non-SBFD symbol, and the single uplink transmission is allowed to use only the non-SBFD symbol, the first slot is a non-available slot if at least one of the following conditions is satisfied: at least one of symbols in which a PUSCH in the first slot is located overlaps a downlink symbol configured for the terminal; or at least one of symbols in which a PUSCH in the first slot is located is the SBFD symbol.

In some embodiments, the first slot is a non-available slot if at least one of the following conditions is satisfied: a symbol in which the first uplink signal is located overlaps a downlink symbol configured for the terminal; a symbol in which the first uplink signal is located overlaps a symbol in which a first SSB is located, and the first SSB is configured by a network device for the terminal; or at least one of symbols in which the first uplink signal is located overlaps a symbol in which a search space of a first PDCCH is located, and the search space of the first PDCCH is configured by the network device for the terminal

In some embodiments, the transmission module 1003 is further configured to: not transmit second information from a beginning of a first symbol of symbols in which first DCI is located until an end of a last symbol of symbols in which an SRS in a first aperiodic SRS resource set is located, where the first DCI is used to trigger the terminal to transmit an aperiodic SRS, the first aperiodic SRS resource set is a resource set in which the aperiodic SRS transmitted by the terminal in response to the first DCI is located, and the second information is used to trigger the terminal to adjust an available slot.

In an embodiment, the receiving module 1001 is configured to receive the first uplink signal on an available slot.

FIG. 11 is a schematic block diagram of a communication device according to an embodiment of the present disclosure. The communication device 1100 may be a network device (e.g., an access network device or a core network device, etc.), or a terminal (e.g., a UE, etc.), or a chip, chip system, or processor, etc., that supports a network device to implement any of the above methods, or a chip, chip system, or processor, etc., that supports a terminal to implement any of the above communication methods. The communication device 1100 may be used to implement the communication method described in the above method embodiments. For details, reference may be made to the description in the above method embodiments.

As illustrated in FIG. 11, the communication device 1100 includes one or more processors 1101. The processor 1101 may be a general-purpose processor or a special-purpose processor, etc., such as a baseband processor or a central processor. The baseband processor may be used to process a communication protocol and communication data, and the central processor may be used to control the communication device (e.g., a base station, a baseband chip, a terminal device, a terminal device chip, a DU, or a CU, etc.), execute programs, and process program data. The processor 1101 is configured to invoke instructions to cause the communication device 1100 to perform any of the above communication methods.

In some embodiments, the communication device 1100 further includes one or more memories 1102 for storing instructions. Optionally, all or part of the memory 1102 may also be outside the communication device 1100.

In some embodiments, the communication device 1100 further includes one or more transceivers 1103. In a case where the communication device 1100 includes one or more transceivers 1103, the communication steps, such as transmitting and receiving in the above method, are performed by the transceiver 1103, and other steps are performed by the processor 1101.

In some embodiments, the transceiver may include a receiver and a transmitter, which may be separate or integrated together. Optionally, terms such as a transceiver, a transceiver unit, a transceiving machine, and a transceiver circuit may be mutually interchangeable, terms such as a transmitter, a transmitter unit, a transceiving machine, and a transmitter circuit may be mutually interchangeable, and terms such as a receiver, a receiving unit, a receiving machine, and a receiving circuit may be mutually interchangeable.

Optionally, the communication device 1100 further includes one or more interface circuits 1104 connected to the memory 1102, and the interface circuits 1104 may be used to receive signals from the memory 1102 or other devices, and may be used to transmit signals to the memory 1102 or other devices. For example, the interface circuit 1104 may read instructions stored in the memory 1102 and transmit the instructions to the processor 1101.

The communication device 1100 in the above description of embodiments may be an access network device, a core network device, an external network device, or a terminal device, but the scope of the communication device 1100 described in the present disclosure is not limited to this, and the structure of the communication device 1100 may not be limited by FIG. 11. The communication device may be a stand-alone device or may be part of a larger device. For example, the communication device may be: 1) a stand-alone integrated circuit IC, or a chip, or a chip system or subsystem; (2) a set having one or more ICs, optionally, the set of ICs may also include storage components for storing data, programs; (3) an ASIC, such as a Modem; (4) modules that may be embedded in other devices; (5) receivers, terminal devices, intelligent terminal devices, cellular phones, wireless devices, handsets, mobile units, vehicle devices, network devices, cloud devices, artificial intelligence devices, etc.; (6) Other devices, etc.

Embodiments of the present disclosure also provide a storage medium having instructions stored thereon that, when the instructions are executed on the communication device 1100, cause the communication device 1100 to perform any of the above communication methods. Optionally, the storage medium is an electronic storage medium. Optionally, the storage medium is a computer-readable storage medium, or may also be a storage medium readable by another device. Optionally, the storage medium may be a non-transitory storage medium, or may also be a transitory storage medium.

Embodiments of the present disclosure also provide a program product that, when executed by the communication device 1100, causes the communication device 1100 to perform any of the above communication methods. Optionally, the program product is a computer program product.

Embodiments of the present disclosure also provide a computer program that, when run on a computer, causes the computer to perform any of the above communication methods.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as illustrative only, with the true scope and spirit of the present disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. A method for determining an uplink transmission resource, performed by a terminal, comprising:
obtaining first information, wherein the first information indicates a symbol type usable for uplink transmission, and the symbol type comprises at least one of a subband full duplex (SBFD) symbol or a non-SBFD symbol; and
determining whether a first slot in which a first uplink signal is located is a non-available slot according to the first information.

2. The method according to claim 1, wherein the non-SBFD symbol comprises at least one of an uplink symbol, a downlink symbol, or a flexible symbol.

3. The method according to claim 2, wherein the first information further indicates at least one of:
multiple uplink transmissions being allowed to use the SBFD symbol and the non-SBFD symbol, and a single uplink transmission being allowed to use only the SBFD symbol or the non-SBFD symbol;
multiple uplink transmissions being allowed to use the SBFD symbol and the non-SBFD symbol, and a single uplink transmission being allowed to use the SBFD symbol and the non-SBFD symbol;
multiple uplink transmissions being allowed to use only the SBFD symbol, and a single uplink transmission being allowed to use only an SBFD symbol; or
multiple uplink transmissions being allowed to use only the non-SBFD symbol, and a single uplink transmission being allowed to use only the non-SBFD symbol.

4. The method according to claim 3, wherein in a case where the first information indicates that the multiple uplink transmissions are allowed to use the SBFD symbol and the non-SBFD symbol, and the single uplink transmission is allowed to use only the SBFD symbol or the non-SBFD symbol,
the first slot is a non-available slot if at least one of the following conditions is satisfied:
a symbol in which the first uplink signal is located comprises the SBFD symbol and the non-SBFD symbol;
at least one of symbols in which the first uplink signal is located overlaps a symbol in which a first synchronization signal block (SSB) is located, an overlapping symbol is the non-SBFD symbol, and the first SSB is configured by a network device for the terminal;
at least one of symbols in which the first uplink signal is located overlaps a symbol in which a first SSB is located, an overlapping symbol is the SBFD symbol, and the first SSB is configured for the terminal to perform measurement;
at least one of symbols in which the first uplink signal is located overlaps a symbol in which a search space of a first physical downlink control channel (PDCCH) is located, an overlapping symbol is the non-SBFD symbol, and the search space of the first PDCCH is configured by the network device for the terminal; or
at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

5. The method according to claim 3, wherein in a case where the first information indicates that the multiple uplink transmissions are allowed to use the SBFD symbol and the non-SBFD symbol, and the single uplink transmission is allowed to use the SBFD symbol and the non-SBFD symbol,
the first slot is a non-available slot if at least one of the following conditions is satisfied:
at least one of symbols in which the first uplink signal is located overlaps a symbol in which a first SSB is located, an overlapping symbol is the non-SBFD symbol, and the first SSB is configured by a network device for the terminal;
at least one of symbols in which the first uplink signal is located overlaps a symbol in which a first SSB is located, an overlapping symbol is the SBFD symbol, and the first SSB is configured for the terminal to perform measurement;
at least one of symbols in which the first uplink signal is located overlaps a symbol in which a search space of a first PDCCH is located, an overlapping symbol is the non-SBFD symbol, and the search space of the first PDCCH is configured by the network device for the terminal; or
at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

6. The method according to claim 3, wherein in a case where the first information indicates that the multiple uplink transmissions are allowed to use only the SBFD symbol, and the single uplink transmission is allowed to use only the SBFD symbol,
the first slot is a non-available slot if at least one of the following conditions is satisfied:
at least one of symbols in which a physical uplink shared channel (PUSCH) in the first slot is located is the non-SBFD symbol;
at least one of symbols in which the first uplink signal is located overlaps a symbol in which a first SSB is located, an overlapping symbol is the SBFD symbol, and the first SSB is configured for the terminal to perform measurement;
at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

7. The method according to any one of claims 3 to 6, further comprising:
determining that a symbol in which the first uplink signal is located comprises at least one SBFD symbol according to the first information; and
in a case where a frequency domain range of the first uplink signal on the at least one SBFD symbol overlaps a range outside an uplink frequency domain range on the at least one SBFD symbol, excluding the first slot from slots used for the uplink transmission.

8. The method according to claim 7, wherein the uplink frequency domain range on the at least one SBFD symbol is one of:
there is an overlapping frequency domain range between a frequency domain range in which an uplink subband on the at least one SBFD symbol is located and an uplink bandwidth part (BWP) of the terminal; or
there is an overlapping frequency domain range between a frequency domain range in which an uplink subband and a guard band on the at least one SBFD symbol are located and an uplink BWP of the terminal.

9. The method according to claim 8, wherein in a case where the first information indicates that the multiple uplink transmissions are allowed to use only the non-SBFD symbol, and the single uplink transmission is allowed to use only the non-SBFD symbol,
the first slot is a non-available slot if at least one of the following conditions is satisfied:
at least one of symbols in which the first uplink signal is located overlaps a downlink symbol configured for the terminal; or
at least one of symbols in which the first uplink signal is located is the SBFD symbol.

10. The method according to any one of claims 1 to 9,
wherein the first slot is a non-available slot if at least one of the following conditions is satisfied:
a symbol in which the first uplink signal is located overlaps a downlink symbol configured for the terminal;
a symbol in which the first uplink signal is located overlaps a symbol in which a first SSB is located, and the first SSB is configured by a network device for the terminal; or
at least one of symbols in which the first uplink signal is located overlaps a symbol in which a search space of a first PDCCH is located, and the search space of the first PDCCH is configured by the network device for the terminal.

11. The method according to any one of claims 1 to 10, further comprising:
in a case where an interval between a symbol in which the first uplink signal is located and a second PDCCH is less than a minimum time interval corresponding to a terminal capability of the terminal, excluding the first slot from slots used for the uplink transmission, wherein the second PDCCH is used to schedule the first uplink signal.

12. A method for determining an uplink transmission resource, performed by a network device, comprising:
transmitting first information, wherein the first information is configuration information of the uplink transmission resource for a terminal, the first information indicates a symbol type usable for uplink transmission, and the symbol type comprises at least one of a subband full duplex (SBFD) symbol or a non-SBFD symbol.

13. The method according to claim 12, wherein the non-SBFD symbol comprises at least one of an uplink symbol, a downlink symbol, or a flexible symbol.

14. The method according to claim 13, wherein the first information further indicates at least one of:
multiple uplink transmissions being allowed to use the SBFD symbol and the non-SBFD symbol, and a single uplink transmission being allowed to use only the SBFD symbol or the non-SBFD symbol;
multiple uplink transmissions being allowed to use the SBFD symbol and the non-SBFD symbol, and a single uplink transmission being allowed to use the SBFD symbol and the non-SBFD symbol;
multiple uplink transmissions being allowed to use only the SBFD symbol, and a single uplink transmission being allowed to use only an SBFD symbol; or
multiple uplink transmissions being allowed to use only the non-SBFD symbol, and a single uplink transmission being allowed to use only the non-SBFD symbol.

15. The method according to claim 13, wherein in a case where the first information indicates that the multiple uplink transmissions are allowed to use the SBFD symbol and the non-SBFD symbol, and the single uplink transmission is allowed to use the SBFD symbol or the non-SBFD symbol,
the first slot is a non-available slot if at least one of the following conditions is satisfied:
a symbol in which the first uplink signal is located comprises the SBFD symbol and the non-SBFD symbol;
at least one of symbols in which the first uplink signal is located overlaps a symbol in which a first synchronization signal block (SSB) is located, an overlapping symbol is the non-SBFD symbol, and the first SSB is configured by the network device for the terminal;
at least one of symbols in which the first uplink signal is located overlaps a symbol in which a first SSB is located, an overlapping symbol is the SBFD symbol, and the first SSB is configured for the terminal to perform measurement;
at least one of symbols in which the first uplink signal is located overlaps a symbol in which a search space of a first physical downlink control channel (PDCCH) is located, an overlapping symbol is the non-SBFD symbol, and the search space of the first PDCCH is configured by the network device for the terminal; or
at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

16. The method according to claim 13, wherein in a case where the first information indicates that the multiple uplink transmissions are allowed to use the SBFD symbol and the non-SBFD symbol, and the single uplink transmission is allowed to use the SBFD symbol and the non-SBFD symbol,
the first slot is a non-available slot if at least one of the following conditions is satisfied:
at least one of symbols in which the first uplink signal is located overlaps a symbol in which a first SSB is located, an overlapping symbol is the non-SBFD symbol, and the first SSB is configured by the network device for the terminal;
at least one of symbols in which the first uplink signal is located overlaps a symbol in which a first SSB is located, an overlapping symbol is the SBFD symbol, and the first SSB is configured for the terminal to perform measurement;
at least one of symbols in which the first uplink signal is located overlaps a symbol in which a search space of a first PDCCH is located, an overlapping symbol is the non-SBFD symbol, and the search space of the first PDCCH is configured by the network device for the terminal; or
at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

17. The method according to claim 13, wherein in a case where the first information indicates that the multiple uplink transmissions are allowed to use only the SBFD symbol, and the single uplink transmission is allowed to use only the SBFD symbol,
the first slot is a non-available slot if at least one of the following conditions is satisfied:
at least one of symbols in which a physical uplink shared channel (PUSCH) in the first slot is located is the non-SBFD symbol;
at least one of symbols in which the first uplink signal is located overlaps a symbol in which a first SSB is located, an overlapping symbol is the SBFD symbol, and the first SSB is configured for the terminal to perform measurement;
at least one of symbols in which the first uplink signal is located overlaps a symbol in which a search space of the first PDCCH is located, an overlapping symbol is the SBFD symbol, and the search space of the first PDCCH is configured for the terminal to receive a PDCCH signal.

18. The method according to claim 13, wherein in a case where the first information indicates that the multiple uplink transmissions are allowed to use only the non-SBFD symbol, and the single uplink transmission is allowed to use only the non-SBFD symbol,
the first slot is a non-available slot if at least one of the following conditions is satisfied:
at least one of symbols in which a PUSCH in the first slot is located overlaps a downlink symbol configured for the terminal; or
at least one of symbols in which a PUSCH in the first slot is located is the non-SBFD symbol.

19. The method according to any one of claims 12 to 18,
wherein the first slot is a non-available slot if at least one of the following conditions is satisfied:
a symbol in which the first uplink signal is located overlaps a downlink symbol configured for the terminal;
a symbol in which the first uplink signal is located overlaps a symbol in which a first SSB is located, and the first SSB is configured by the network device for the terminal; or
at least one of symbols in which the first uplink signal is located overlaps a symbol in which a search space of a first PDCCH is located, and the search space of the first PDCCH is configured by the network device for the terminal.

20. The method according to any one of claims 12 to 19, further comprising:
not transmitting second information from an beginning of a first symbol of symbols in which first downlink control information (DCI) is located until an end of a last symbol of symbols in which a sounding reference signal (SRS) in a first aperiodic SRS resource set is located,
wherein the first DCI is used to trigger the terminal to transmit an aperiodic SRS, the first aperiodic SRS resource set is a resource set in which the aperiodic SRS transmitted by the terminal in response to the first DCI is located, and the second information is used to trigger the terminal to adjust an available slot.

21. A communication apparatus comprising:
a processing module, configured to obtain first information, wherein the first information indicates a symbol type usable for uplink transmission, and the symbol type comprises at least one of a subband full duplex (SBFD) symbol or a non-SBFD symbol; and determine whether a first slot in which a first uplink signal is located is the non-available slot according to the first information.

22. A communication apparatus comprising:
a transmission module, configured to transmit first information, wherein the first information indicates a symbol type usable for uplink transmission, and the symbol type comprises at least one of a subband full duplex (SBFD) symbol or a non-SBFD symbol.

23. A communication device comprising:
at least one processor;
wherein the at least one processor is configured to perform the method according to any one of claims 1 to 20.

24. A storage medium storing instructions that when executed by a processor, cause the method according to any one of claims 1 to 20 to be performed.
